(19) Europäisches Patentamt
European Patent Office
Office européen des brevets

(11) **EP 4 064 764 B1**

(12) # EUROPEAN PATENT SPECIFICATION

(45) Date of publication and mention
of the grant of the patent:
**04.03.2026 Bulletin 2026/10**

(51) International Patent Classification (IPC):
**H04W 48/18** (2009.01)    **H04W 36/14** (2009.01)

(52) Cooperative Patent Classification (CPC):
**H04W 48/18; H04W 36/1443**

(21) Application number: **22163568.3**

(22) Date of filing: **22.03.2022**

(54) **SWITCHING BETWEEN DIFFERENT CELLULAR NETWORKS WHEN THE QOS IN ANOTHER NETWORK IS BETTER THAN IN THE CURRENT NETWORK**

UMSCHALTEN ZWISCHEN VERSCHIEDENEN MOBILFUNKNETZEN, WENN DIE QOS IN EINEM ANDEREN NETZ BESSER IST ALS IM AKTUELLEN NETZ

BASCULER ENTRE DIFFÉRENTS RÉSEAUX CELLULAIRES LORSQUE LA QOS DANS UN AUTRE RÉSEAU EST MEILLEURE QUE DANS LE RÉSEAU ACTUEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2021 NL 2027796**

(43) Date of publication of application:
**28.09.2022 Bulletin 2022/39**

(73) Proprietor: **Lyfo B.V.**
**4191 NW Geldermalsen (NL)**

(72) Inventors:
• **van den Brink, Timon**
**Buurmalsen (NL)**
• **Stoker, Jeroen Frederik Jan**
**Buurmalsen (NL)**
• **Zonneveld, Roland Matthijs**
**Buurmalsen (NL)**

(74) Representative: **Arnold & Siedsma**
**Bezuidenhoutseweg 57**
**2594 AC The Hague (NL)**

(56) References cited:
CN-A- 109 511 107        US-A1- 2015 092 611
US-A1- 2015 373 574        US-A1- 2020 337 054
US-B1- 10 079 734

• **"The UICC A multi-network authentication device An application platform Gemalto", 1 April 2008 (2008-04-01), XP055189130, Retrieved from the Internet <URL:http://www.cdg.org/news/events/cdmaseminar/080430_InterTech/10-Gemalto Interworking.pdf> [retrieved on 20150513]**
• **GLOBALPLATFORM INC: "GlobalPlatform Device Technology - Secure Element Access Control - Version 1.1", 1 September 2014 (2014-09-01), XP093265327, Retrieved from the Internet <URL:https://globalplatform.org/wp-content/uploads/2014/10/GPD_SE_Access_Control_v1.1.pdf>**
• **GLOBALPLATFORM INC: "GlobalPlatform Device Technology - Device API Access Control - Version 1.0", 1 November 2017 (2017-11-01), XP093265321, Retrieved from the Internet <URL:https://globalplatform.org/wp-content/uploads/2018/06/GPD_Device_API_Access_Control_v1.0_PubliCRelease.pdf>**

**EP 4 064 764 B1**

## Description

The present invention relates to a mobile communication device and a computer-implemented method of operating a mobile communication device.

Mobile cellular communication is ubiquitous technology heavily utilized in a variety of facets of modern-day society. From voice communication to high-speed data connections via data connections, operator which may be referred to as Mobile Network Operators, network operators, service millions of subscribers on a daily basis.

Mobile cellular communication operates via cellular networks, generally Public Land Mobile Networks, networks, which provide radio communication service covering geographic areas divided into cells served by radio antennas. Different cellular networks may cover different areas and may therefore be available in the same or different areas. The same area may have different qualities of service from different cellular networks, and the same network may have provide different qualities of service in different areas.

In order to obtain service, a mobile communication device may attach to a network which is available in the area which the device is present. Mobile communication devices may move, or may be moved by users, between different geographical areas covered by different cellular antennas. When a mobile communication device is attached to a cellular network and moves toward the edge of an area covered by antennas of said network, the quality of service of the network may worsen and at some point the attachment may fail altogether. Furthermore, cellular network coverage may not be uniform and continuous in a coverage area, so it may also happen that quality of service worsens or is lost due to local or temporary conditions inside the same coverage area or even inside the same cell.

When an attachment to a network fails, the mobile communication device may attempt to reattach to the same network and/or may scan for other cellular networks which cover the area in which it is currently present in order to attempt to attach to an other network. The loss of attachment and the subsequent attempts to reattain an attachment take time and cause a degraded quality of service and a bad user experience, often for an extended period of time.

Furthermore, public services, which lagged in the uptake of mobile communication devices, are increasingly using both voice communication and data connections over public networks. With the growth of the dependency of public services on cellular service, the impact of disturbances in these networks has steadily increased to the point where a major outage to one of the operators' network engenders significant loss of productivity.

Effective technical solutions for these issues have not been developed due to the difficulty of achieving a good user experience in the face of unreliable qualities of service, as well as the difficulty of combining a good user experience with good performance in terms of interoperation risks, legal intercept issues, and interoperability between vendor hardware.

According to its abstract, Chinese patent application CN109511107A concerns a mobile network intelligent roaming selection method. The method comprises the following steps in order: step one, emptying a PLMN list, scanning all operator networks surrounding the current environment, acquiring signal intensity of each operator network, and updating the signal intensity of each operator network to the PLMN list; step two, selecting the operator network with the best signal intensity in the PLMN list to establish the network connection; step three, periodically checking the network quality of service of the operator network in current use; step four, judging whether a switchable operator network is existent in the PLMN list, if the switchable operator network is existent in the PLMN list, performing step two and forbidding the operator network before switching in the PLMN list, or performing the step one; and step five, continuously using the currently used operator network and performing the step three. By scanning the operator information in the current environment through the background, the network state and like data are acquired, thereby selecting and switching to the optimal network according to the above state data.

According to its abstract, in US patent application US20150373574A1, systems and methods for quality of experience measurement and wireless network recommendation and/or switching are disclosed. In some embodiments, a method comprises connecting to a cellular data network, measuring a signal strength value of a Wi-Fi data network within range of the digital device, calculating an overall Wi-Fi score based on the measured signal strength value of the Wi-Fi data network, measuring a signal strength value of the cellular data network, calculating an available bandwidth of the cellular data network, calculating an overall cellular data network score based on the measured signal strength value of the cellular data network and the calculated available bandwidth of the cellular data network, comparing the overall Wi-Fi score and the overall cellular data network score, and switching from the cellular data network to the Wi-Fi data network based on the comparison of the first bandwidth score to the bandwidth threshold value.

According to its abstract, in US patent US10079734B1, a system, method, and computer program product are provided for maintaining quality of experience (QoE) for a client device on a network. In use, access points that are available to a client device are determined, based on a policy. Additionally, a current QoE provided to the client device by one of the access points utilized by the client device to access the network is determined. This QoE could be valued as a score computed by a function called QoE Metric taking QoS parameters as inputs. An expected QoE associated with each of the other access points is then determined. Further, the access point utilized by the client device to access the network is conditionally switched to one of the other access points, based on the current QoE and the expected QoEs. Additionally,

2

any potential QoE downgrades on the current access point is detected using QoE Degradation Patterns that could be matched with current QoS measures and can encourage the client device to determine more accurately the current QoE.

According to its abstract, in US patent application US20150092611A1, methods and devices are disclosed for establishing a second call during a first call on a multi-SIM communication device. A quality of the first call between a calling party and a called party using a first subscription for a first network may be determined to be degrading. Network alternatives may be provided for establishing the second call in response to determining that the quality of the first call is degrading. One of the network alternatives may be selected based on an order of suitability for originating the second call. A notification to the called party using information associated with calling party and the second call may be provided before the second call is originated. The information associated with the second call may identify the calling party to the called party before the second call is originated. According to its publication, GlobalPlatform Device API Access Control Specification v1.0, GlobalPlatform Inc., October 2019, defines a framework in which an Access Control Enforcer (ACE) within a mobile device operating system verifies whether a user-space application is authorised to communicate with a secure element, such as a UICC, based on access-control data stored on the UICC. The specification, however, does not describe or allow the user-space application to perform direct modem-control operations through this authorisation mechanism.

The invention is defined by the independent and dependent claims. The description and the figures illustrate embodiments consistent with the wording of the claims. In particular, the present invention relates to a mobile communication device and a computer-implemented method in which a user-space application obtains, via an operating system, authorisation to access modem control functions by means of a secure-element-access procedure using a Secure-Element-Access API and an Access-Control-Enforcer, based on access-control data stored on a UICC. Upon successful validation, the authorised application performs network-quality measurements and controls network reselection according to quality-of-service parameters. The embodiments described herein shall be interpreted in a manner consistent with the appended claims, which define the extent of protection sought.

Figures 1A and 1B depict scenarios involving devices, users and coverage areas of networks.

Figure 2 depicts an embodiment of a mobile communication device.

Figures 3A-3C depict embodiments of communication and control paths in a mobile communication device. The embodiment shown in Fig. 3B, in which the secure-element-access procedure is initiated by a UICC application, is described for completeness but does not fall within the wording of the present claims.

Figures 4A-4I depict methods of operating a mobile communication device.

Figures 5A and 5B depict methods of modelling quality of service for a mobile communication device.

Cellular networks, more commonly referred to as mobile networks, are communication networks operated by a mobile network operator (MNO) through which a communication service is provided to areas divided into cells. Communication over a cellular network via a communication service may involve sending and receiving signals to exchange data via radio waves according to one or more radio access technologies (RATs), for example NR, LTE, WCDMA, and GSM.

Cellular networks' communication services are provided to mobile communication devices, which may be various kinds of electronic devices which may also be referred to as user equipment (UE), and which are configured to communicate with other devices by sending and receiving data via a cellular network. A mobile communication device may move between different areas in different cells or between areas within the same cell having different network characteristics, for example by being transported or carried by a user.

An operator may provide a cellular communication service to an area via a base station, comprising for example a stationary mast or cell tower, wherein the base station comprises one or more antennas providing network service via one or more radio access technologies, each with their own cell structure. A network operator may attempt to optimize network coverage by arranging and operating their serving antennas such that the cells of a network approach a regular cell structure, for example, a certain hexagonal pattern.

An attachment of a mobile communication device to a network runs via cells in the area of the mobile communication device. A device may communicate with a network in the user-plane or the control-plane. In the control plane, control data, for example related to attaching or detaching to a cellular network, or configuring an attachment to the network, may be exchanged. In the user plane, user data, such as voice data, text data, application updates, or user files, may be exchanged.

Transferring the attachment from a first cell of a cellular network to a second cell of a cellular network may result in a handover or reselection. A reselection procedure may be executed when an attachment between the mobile communication device and the first cell is not presently exchanging data. A handover procedure may be executed when an attachment between the mobile communication device and the first cell is presently exchanging data, and may be the more complicated of the mentioned procedures.

A cellular network may refer to a public land mobile network, PLMN. Certain PLMNs may be publicly available such that any user may access the said network according to a standardized contract with a network operator, while other PLMNs may be private such that said networks are restricted to a specific set of individual or institutional users.

Each antenna may cover a coverage area referred to as a cell, and may serve one or more RATs of a network to the same area in the same or overlapping cells. Due to varying distance to the serving antenna and discontinuities in the environment in a cell, among other factors, quality of service of a network may vary between cells or within a cell.

Quality of service of a network may refer to the quality of a communication service, for example to the quality of a signal received by a mobile communication device, the variability of the signal, the effective bandwidth of the communication service, and/or the reliability of the service. Quality of service may refer to the quality of a service over a certain period of time. Quality of service may be defined by, or represented by, a network quality parameter or a combination of network quality parameters which may be measured by a device.

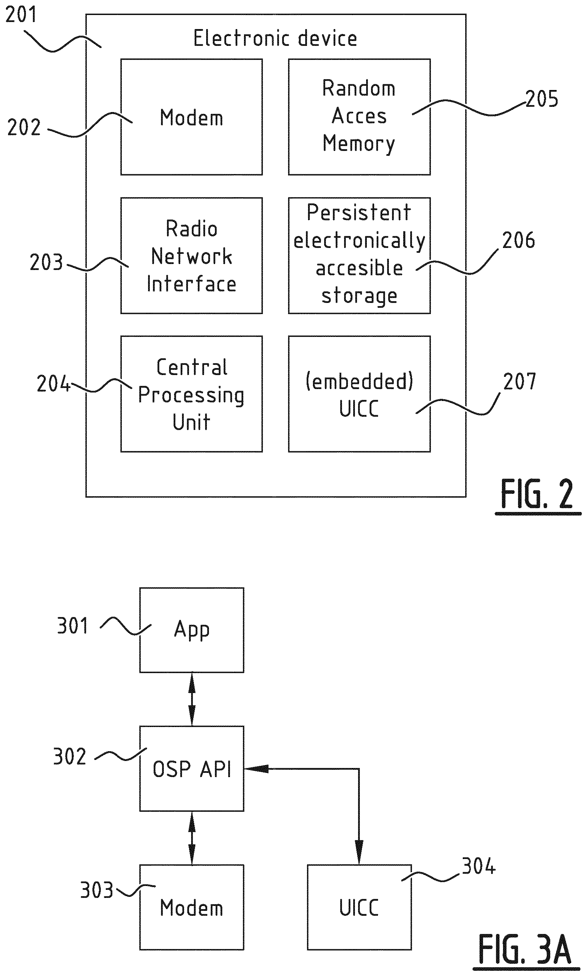

As will be described below with reference to figure 2, a mobile communication device may comprise various components which allow it to scan for cellular networks in its present area; to attach to a cellular network; to maintain a network attachment to a cellular network; and to detach from a attached cellular network. Scanning may refer to receiving and optionally sending radio signals in order to measure network parameters of available networks or detecting which, if any, networks are available at all in the area where the device is currently present, and via which RAT. Components required for data communication may have a limited capacity to support communication by for example exchanging data.

When a mobile communication device is not attached to a cellular network, for example because of being detached from the network due to degraded quality of service, it may scan for cellular networks in its present area. Said scanning may comprise attempting to receive and/or send signals via radio waves in order to detect which cellular networks, if any, are being served in its area; to detect which RATs of these networks are available for attaching; and to estimate what the quality of service will be to the various RATs of the various detected cellular networks. This scanning may take a substantial amount of time.

A mobile communication device may attach to a network to use its communication service. Attaching to a cellular network may involve registering with the network according to a certain protocol, while the network is available. Detaching from a cellular network may involve deregistering with the network according to the protocol, while the network is available. According to some protocols, a registered device may maintain an attachment to a network by sending and/or receiving liveness messages to and/or from the network regularly or at predetermined intervals. A registered device and the respective network operator may be referred to as maintaining a session. A network operator may keep a session log of communication activity for each registered device.

Registration with a network and establishing a session may involve securely providing an identity, in some cases for example an international mobile subscriber identity, IMSI, to the network according to a predetermined protocol. When establishing a session, a network may assign a temporary identity, in some cases for example a temporary IMSI, TIMSI, to a device in order to identify the device in communication with the network during the attachment, for example when exchanging data or when exchanging liveness messages. Registering using an identity and communicating using a temporary identity according to a predetermined protocol may be required for, for example, technical and/or legal intercept reasons.

Depending on the local network characteristics in the area in which a mobile communication device is present, the quality of service of a maintained attachment may vary. A lower quality of service may involve reduced network quality parameters, for example it may become slower, include a delay, be inconsistent or unreliable, or in the worst case be lost altogether, resulting in a detachment.

If an attached network is not available for the mobile communication device for a certain period of time, for example such a period of time that a certain number of liveness messages cannot be sent and/or received, the attachment between the device and the network may fail. The device may not be registered with the network anymore and a reattachment may be necessary to use the network service again once the network becomes available again.

A device may establish, maintain, or end a data connection via a network to which it is attached. In certain embodiments, a data connection may refer to a PDP context. A device may interrupt a data connection, which may refer to ending a data connection, either gracefully according to a protocol or ungracefully, and optionally later attempting to restore the data connection. Via a data connection, a device may send and receive, that is, exchange, data. When a device is not exchanging data over a data connection, the device is in passive mode. When a device has a data connection and is exchanging data over said data connection, the device is in active mode.

Scanning for other networks requires the use of the modem which may conflict with the use of the modem for exchanging data over the data connection. Therefore, in preferable embodiments the device scans for other networks, including detecting whether any other networks are present in the area at all and/or measuring network quality parameters of one or more networks in the area, while the device is in passive mode. In particular, a device may adaptively schedule the detecting and/or measuring in order to cause as little disruption as possible to the active data connection, if any.

A plurality of serving antennas which serve the same network may generally be positioned by the network operator such that their cells provide continuous coverage of as large an area as possible, in particular a large area of a single country or, in the case of a large country, different predefined service areas of said country. A country may correspond to a mobile country code, MCC, and may be divided into predefined service areas according to the used radio access technology. Multiple operators within a country may use different mobile network codes, MNCs.

Multiple mobile network operators may operate different networks in the same or overlapping areas in the same country or service area, or in border areas near the borders between different countries or service areas. Network operators may include network operators operating their own serving installations or Mobile virtual network operators, MVNOs, sometimes referred to as mobile network providers, using other network operators' physical antennas. Different network operators may serve their different networks from different locations, or from the same locations, for example using the same masts using different antennas or using the same antennas. Different network operators may operate their different networks using the same or similar cell structures, or using different cell structures. A network operator may improve the efficient and effective operation of a cellular network by limiting the amount of data which a mobile communication device sends and/or receives, in total or within a certain time window, and/or by communicating via standardized communication protocols and requiring mobile communication devices to behave in a standardized way. A mobile communication device may interact with a network operator according to a service plan, wherein that network operator may be referred to as a home network operator.

An operator may provide a component, for example a universal integrated circuit card, UICC, which may identify a device to networks using an IMSI, and which may provide configurations for an automatic network selection mode wherein the device takes decisions regarding network attachments according to network operator rules and preferences. A UICC may provide many other functions. Operating according to a service plan, a mobile communication device may attach to networks of other network operators or to foreign networks of the home network operator, according to rules and preferences of the home network operator or the other network operators. This may particularly help to obtain service in case the present area of the mobile communication device is in a country or an area of a country where the home network operator has little network coverage or no network coverage of its own, or in emergencies when no preferred or allowed networks of the operator are available. Such a case may be referred to as roaming. Roaming in general is defined as the use of mobile services from another operator, which is not the home operator, and such rules and preferences may be referred to as roaming agreements.

Operating according to a service plan and/or a roaming agreement, a mobile communication device may try to attach or reattach to a home network or equivalent home network of the home network operator before scanning for and/or attaching to networks of other network operators; and/or to attach to a limited number of preferred or allowed RATs or networks depending on the present area of the mobile communication device; and/or to periodically attempt to reattach to the network of the home network operator or a higher priority network.

One form of roaming is international roaming, which allows users to use their mobile devices when abroad. National roaming is roaming on networks of operators within the same MCC. A network operator may require an internationally roaming device to preferentially attach to equivalent home networks or to certain predetermined preferred networks, or may steer the device in substantially real time to attach to certain networks, or may disallow connecting to certain networks, according to a roaming agreement. A device may for example be disallowed from roaming on any other networks in a country in which the operator provides an equivalent home network, except in emergencies, and may be subject to preferences or steering. A device may be rejected from attaching by a network according to a service plan or operator rule or preference.

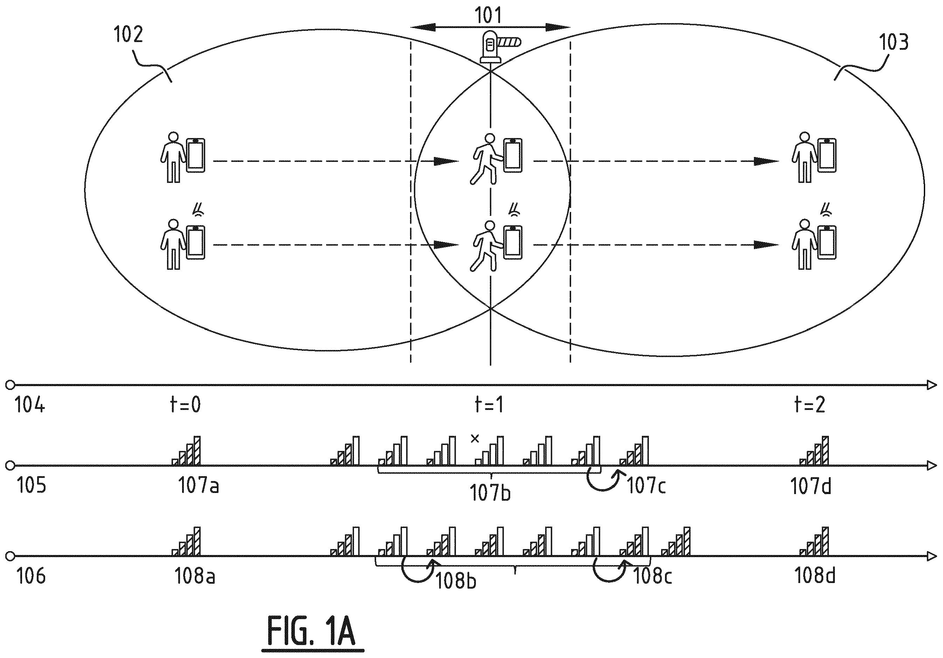

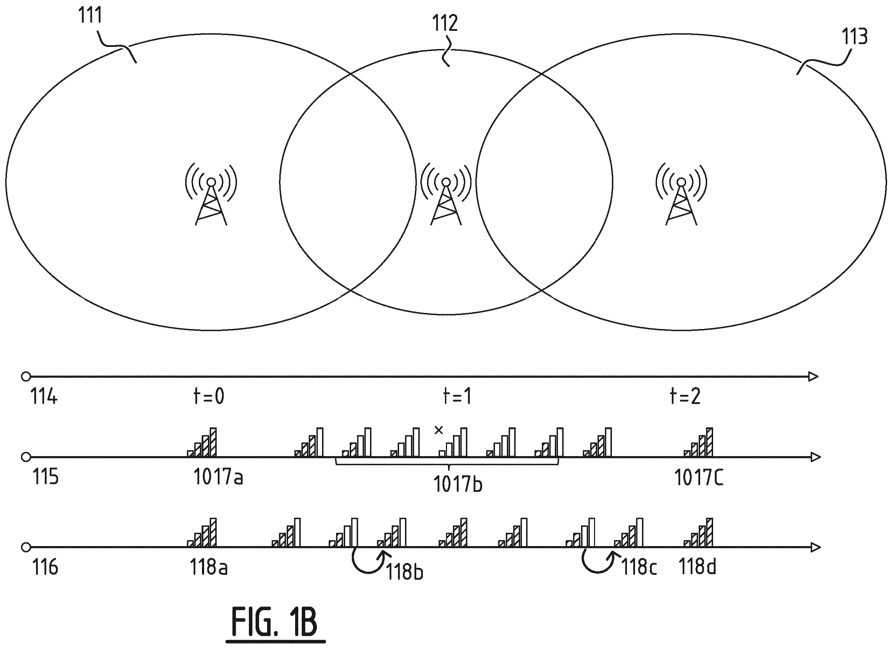

Figures 1A and 1B depict scenarios involving devices, users and coverage areas of networks.

In figure 1A an example scenario of a device carried by a user crossing a border area 101 into a different country is depicted. The time axis 104 represents a time span with various moments t =0, t=1, t=2 being indicated. The quality of service105 provided to the device is indicated.

At t = 0, the first mobile communication device carried by the first user is in a first coverage area 102 and is able to maintain an active attachment to a first cellular network. The first network has sufficient network quality parameters for a good quality of service 107a.

At t = 1, the user is in a border area 101 and the situation arises that one or more network parameters of the first network to which the device is attached deteriorates. When the quality of service 107b of the network to which the device is attached decreases, the required communication link may deteriorate in quality and can no longer be guaranteed, which significantly limits the performance of the device and ultimately causes a network attachment failure. The device may remain attached to the current network as long as possible and a long period of attenuated and disturbed signal is present before a new attachment to an alternative network is established.

When the attachment is lost, the device may already be inside, or may be gradually entering, a second coverage area 103 of a second cellular network providing a better quality of service 107c in that area. After losing the attachment, the device may attempt to reattach to the first cellular network and/or may start scanning for other cellular networks. This can result in minutes of trying to attach and being out of communications range.

At t = 2, the device is in the other country in a second coverage area 103 with network coverage from a cell of a second cellular network of an network operator with sufficient quality of service 107d, in which it is possible to establish a stable and high quality attachment. As soon as the device has moved sufficiently far within range of the radio cell of a network operator with which the operator of the user has a roaming agreement, the device may attempt to start up a new (roaming) attachment with the foreign network. Sometimes several attempts are required to establish a new attachment. It may also happen that for some time there is no network available with which the home network operator has a roaming agreement. In that case, the device may experience a longer period of "no service". This can result in minutes of trying to attach and performing no effective communication but only being able to make an emergency call.

Also in figure 1A a different example scenario of device carried by a user crossing a border area 101 into a different country is depicted. The quality of service 106 provided to the device is indicated.

At t = 0, a mobile communication device carried by a user is able to maintain an active attachment to a first cellular network. The network meets the network parameters for a good quality of service 108a. Incidentally or periodically, the device may scan networks in its present area and measure various parameters of these networks. It may also be determined whether the quality of the attachment of the network currently attached to and that of other networks exceeds certain predetermined threshold values for network quality.

At t = 1, the moment the device detects that the quality of service 108b of the network to which the device is currently attached falls below a predetermined threshold value, the mobile communication device may check whether alternative networks are available that do exceed the threshold value and with which it can attach. The application may also measure whether the modem has sufficient unused data sending and/or receiving capacity for the device at that time to scan for other networks without losing a data connection, if the device has a data connection. When these conditions are met, the mobile communication device may initiate an automatic switch from a network to an other network with the highest quality. The device may now make a different choice to switch networks, compared to the previous scenario. Instead of the user experiencing an intermittent attachment and network failure for minutes, the user may now experience a minor interruption for a few seconds, after which a good quality of service 108c is established again. The user is not experiencing a lack of attachment to cellular networks for an extended period of time. The user experience is thus significantly better than in the previously described scenario.

At t = 2, and as long as the device is located in a second coverage area 103 with sufficient coverage of a radio cell of a mobile operator, in which a stable and good attachment with a high quality of service 108d is possible, the device may remain attached to it.

In figure 1B, an example scenario of a device carried by a user encountering a plurality of networks is depicted. The quality of service 115 provided to the device is indicated. The scenarios depicted in figure 1B may for example apply to the following situations: transitions from preferred private networks to publicly accessible networks and vice versa; outdoor operator specific indoor networks, areas with weak coverage or white spots in operator networks.

At t = 0, the device is located in a country where the home network operator provides coverage, in a coverage area 111 of the home network, with alternative networks available from other network operators in the same country. The quality of service 117a is good.

At t = 1, the quality of service of at least one of these other network operators in the geographic area 112 where the device is located is better than the quality of service 117b of the network of the mobile communication device's home network operator. The device observes networks in the area and as soon as the performance of the network it is attached to decreases, for example due to a weakening attachment, the user experiences a period of hiccups, hangs, lags and finally detachment (no data connectivity and/or voice communication). Even if the device is sufficiently far within range of a radio cell of another operator with good performance, the device may not establish a new attachment with this other network, for example because attachment is rejected by the other network. This can result in minutes of being without attachment resulting in a very bad customer experience.

At t = 2, only when the device enters again a coverage area 113 of its home operator with a sufficiently good quality of service 117c, may an attachment to the network of the home network operator be restored.

Also in figure 1B, a different example scenario of device carried by a user encountering a plurality of networks is depicted. The quality of service 116 provided to the device is indicated.

At t = 0, the device is located in a country where the home network operator provides coverage, in a coverage area 111 of the home network, with alternative networks available from other network operators in the same country. Incidentally or periodically, the device may scan for networks in its present area and measure various parameters of these networks. It may also be continuously or regularly measured whether the quality of service 118a of the presently attached network and that of other networks exceeds certain predetermined threshold values for network quality.

At t = 1, the situation may arise that the performance of an other operator in the geographic area 112 where the device is located is better than the quality of service of the network of its own operator. The moment the device detects that the current network quality of service falls below said predetermined threshold value, it may check whether there are alternative networks available that do exceed a threshold value and to which it can attach. The mobile communication device may also measure whether there is sufficient available modem capacity available for the scanning without data exchange being impacted. If these conditions are met, the application may initiate an automatic switch from the current network to the network with the next optimal quality of service. The mobile communication device may now make a choice to switch networks. Substantially seamless switching between operators within one country becomes possible, even if parties do not have mutual agreements to use each other's networks when using an international UICC.

Instead of the user experiencing an intermittent lack of communication and network failure for minutes, the user may now experience a minor interruption for a few seconds, after which an attachment with a good quality of service 118b is established with another national operator. The user experiences minimal attachment disruption, as opposed to the conventional method of handling this situation. The user experience is thus significantly better. If the situation arises that the coverage of the network which the device is attached to decreases again and falls below a threshold, the device may switch again to another network present at that time with a significantly better network quality of service 118c.

At t = 2, to prevent attaching back and forth between networks undesirably often in a short period of time, the device may remain attached to this network as long as it is located in a geographic area 113 with sufficient coverage of a mobile operator's radio cell, within in which a stable and good attachment with a quality of service 118d above a certain predetermined threshold quality value is possible.

Figure 2 depicts an embodiment of a mobile communication device.

A mobile communication device 201 may be one of several kinds of electronic device, for example a mobile phone, a laptop computer, or a vehicle-based device. A mobile communication device 201 may be composed of various hardware and software components which enable the device 201 to perform a variety of functions.

A mobile communication device 201 may comprise a modulator - demodulator 202. The modulator - demodulator 202, often shortened to modem 202, is a hardware component that converts data from a digital format into a format suitable for the intended transmission medium. Its primary function is to modulate one or more carrier wave signals encoding digital information for transmission and demodulate received signals for decoding of the information contained therein.

A mobile communication device 201 may comprise a radio network interface 203. The radio network interface 203, which may be referred to as antenna, is an array of one or more conductors that are electrically connected to the transmitter and receiver. The radio network interface 203 ensures that signals from the modem 202 are propagated to the transmission medium and signals from the transmission medium are in turn propagated to the modem 202.

A mobile communication device 201 may comprise a central processing unit 204. The central processing unit 204, CPU, also processor, consists of electronic circuitry within a composite device that executes instructions based on instructions of a computer program. It can perform basic arithmetic, logic, controlling, input/output operations based on the received instructions.

A mobile communication device 201 may comprise memory 205, 206 which may consist of random access memory 205 and persistent electronically accessible storage 206. Random access memory, RAM, 205 is a form of electronically accessible storage which can be read and changed in any order. Within the composite device it is utilized to store working data and machine code. RAM 205 is a volatile form of storage where all information present in the storage is lost upon loss of power. Persistent electronically accessible storage, persistent memory, 206 provides storage which can be read and changed in any order. Within the composite device it is utilized to store machine code and configuration data. The persistent memory 206 is a non-volatile form of storage where information that is present is not lost upon loss of power.

An operating system and various device applications, apps, (not depicted) may be stored in the persistent memory and may be executed by the processor in order to operate the mobile communication device 201. The operating system and device applications may be configured and updated, and device applications may be added and deleted, via a communication network, for example a cellular network. Device applications may be provided with the device, or may for example be acquired via an app store. Certain components of a device may be secured such that observing and controlling these devices by applications is limited. Device applications or parts of the OS may be restricted to running in a mode, which may be referred to as a user space, which is served by the operating system and wherein said applications are only permitted limited views and control of various secured components of the mobile communication device 201, in some cases including the modem 202. An application or part of the OS not running in user space may be running in kernel space, wherein no or fewer restrictions apply to observing or controlling secured components.

A mobile communication device 201 may comprise a replaceable or permanent Universal Integrated Circuit Card, UICC, 207, which securely stores details about the user using the device 201. The UICC 207 is in this context usually referred to as Subscriber Identity Module, SIM, card, which may be an integrated circuit or for example a software-emulated computing device. The UICC 207 stores and executes applications such as the SIM application which relates to a specific user and contains the corresponding encryption and/or authorization keys to identify said user to the mobile network. Some embodiments of UICCs 207 may contain multiple encryption and/or authorization keys to identify a user to a plurality of mobile networks.

The (e-)UICC 207 may also store and execute other applications. Applications stored and executed by an (e-)UICC 207 may be referenced as UICC applications (not depicted). An example of an UICC application is an authorization application, for example the application type Application Rules Access Master, ARA-M, which controls the permissions of device applications running in user space to observe and control various components of the mobile communication device 201, for example the modem 202. Another example of a UICC application is a phone book. Generally, executing a UICC application on a UICC 207 may be significantly slower than executing a device application using the processor of the mobile communication device 201. According to their UICC applications, UICCs 207 may or may not be configured to allow a device application or OS to scan for networks using an OS API.

Some embodiments of a mobile communication device 201 may comprise two or more UICCs 207 wherein each UICC 207 stores keys to identify the user to a different network. In case a mobile communication device 201 comprises a plurality of UICCs 207, it may comprise a single modem 202 or a plurality of modems 202.

In case of most modems 202, no more than one UICC 207 may be coupled to the modem 202 at any one time. A device 201 may have dual SIM dual standby or dual SIM dual active strategies. In these cases the device 201 shows two separate modem instances which may be virtualized and as such based on one physical modem 202.

A device 201 may utilise the plurality of UICCs 207 sequentially by alternatingly coupling and decoupling the plurality of UICCs 207 to the modem 202. Only a UICC 207 which is connected to the modem may be used by the mobile communication device 201 to attach to a network, and only the connected UICC 207 can authorize a device application in user space to observe or control a secured component, for example a modem 202. In case a mobile communication device 201 comprises a plurality of modems 202, the device 201 may be assigned to, may attach to a second cellular network before detaching from a different first cellular network.

A mobile communication device 201 may further comprise input devices (not depicted) such as a touch screen, physical keys, a microphone, environmental sensors, an orientation sensor, and/or a GPS sensor, and may comprise output devices (not depicted) such as a display which may be included in a touch screen, one or more speakers, and/or a vibration actuator. Some components, such as a touch screen, may function as both input devices and output devices.

Figures 3A-3C depict embodiments of communication and control paths in a mobile communication device.

During normal operation, a mobile communication device may maintain a bi-directional attachment to its serving network by using the Radio Network Interface. Via this the modem can encode/decode signals in either direction which enables the user space to send or receive electronic communication. Communication can then be processed by the Central Processing Unit and from there stored in either RAM or persistent storage. The (e-)UICC provides secure operation functionality for the mobile communication device by handling the generation of derivative encryption/authentication keys for any communication with the network.

A device application may use the various components of the mobile communication device to perform its intended function of enabling seamless communication over any mobile network. This is realised by storing authentication details for the application on the (e-)UICC which can be queried by the machine code present on the device. Should these authentication details be congruent with the details of the device application the machine code present on the device allows the device application running in user space to influence the modem interactions with the network and by doing so modify the behaviour of the device to improve its efficiency in network (re)selection.

An embodiment of this process is depicted in Figure 3A. An app 301 attempts to access the Operating System application programming interface 302, API, to obtain information from and send requests to the modem 303, which in this embodiment is a secured component. To access the secured component, the application may require authorization from a secure element (SE) device. The secure element device may be provided and/or secured by a network operator. The OS API 302 checks the privileges that the device application 301 has against the secure element which in this case is the UICC 304. The UICC 304 authorizes the device application 301 which satisfies the elevated permission check from the OS API 302. Following the authorisation procedure via a secure element access, SEA, API of the OS, the device application can (provided it was authorised) access a set of API 302 calls in the OS providing access to various components such as a modem 303 at an elevated level.

Using an OS API 302 with elevated permissions, the device application can interact with the modem mediated by the API 302. The Modem 303 can be queried using the OS API 302 which lets the device application monitor the attachment status and performance, request the modem 303 to provide information about alternative networks and handles requests to attach to an alternative network. The UICC 304 provides the authentication and authorization credentials for the electronic communication device to attach to the network operator's network and additionally stores the authorization data for the app 301 inside its secure storage.

In other words, in this case a mobile communication device may store a device application 301 or app in the persistent memory 206, which when executed utilizing the CPU 204 and RAM 205 uses an operating system API 302 to interact with the modem 202, 303 in order to for example measure, scan, attach, or detach. This interaction may be authorized by an ARA-M application present on the UICC 304 which is checked by the operating system of the electronic communication device when the device application requests the operating system to control or observe a secured component such as a modem.

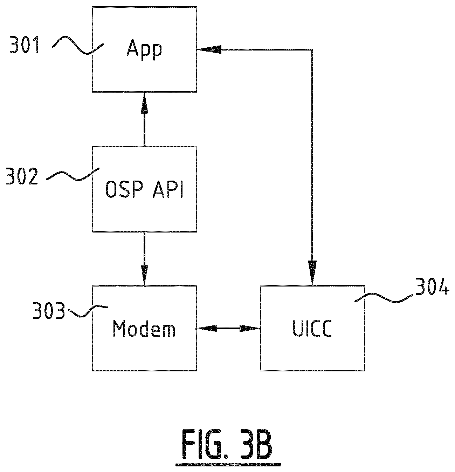

Alternatively or additionally, as shown in figure 3B, said application 301 may interact with the modem 303 via an API of a UICC application residing on the UICC 304, wherein a separate UICC application such as the ARA-M application, or the same UICC application that serves the API, authorizes the interaction when the device application requests the operating system to control or view the state of the modem 303. An OS API 302 may or may not exist in various embodiments and is out of the loop.

Alternatively or additionally a device application may be registered as authorized to access certain secured components via an external signing mechanism. A UICC 304 may authorize a specific device application 301 as a whole to control or observe a secured component such as a modem 303 instead of or in addition to authorizing individual API calls as in the examples above.

Alternatively, a device application 301 may control components such as a modem 303 when security measures such as authorization mechanisms provided by the UICC 304 are not present or are temporarily disabled by a user. This scenario may be called rooting and may compromise the security of a mobile communication device to malicious device applications or other threats.

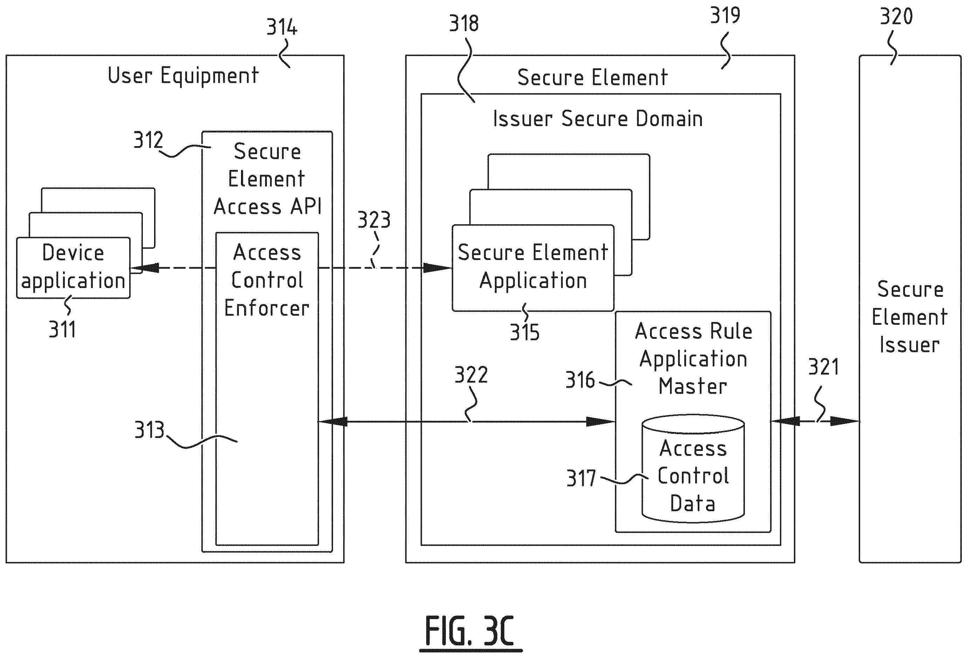

An embodiment of components of a mobile communication device is depicted in figure 3C. The electronic communication device, or user equipment 314, interacts with a replaceable or permanent UICC via the Secure Element Access API 312 which provides an access channel 323 to a secure element 319 such as a UICC comprising an issuer secure domain 318. The issuer may be a cellular network provider issuing access control data 316 related to a device application 311. The issuer secure domain 318 may include one or more secure element applications 315 and an ARA-M 316.

The SEA API 312 utilises an element called the Access Control Enforcer (ACE) 313 to perform an access control validation 322 check of a requesting device application 311 against the Access Rule Application Master (ARA-M) 316 containing one or more Access Rules as part of access control data 317. When the SEA 315 through the ACE 313 checks the credentials of a device application 311 requesting elevated privileges on the operating system, OS, it attempts to communicate with the ARA-M 316. Should the ARA-M 316 be present on the secure element 319 it may request the app ID reference signature fingerprint, for example in either Secure Hash Algorithm-1 (SHA-1) or SHA-256 format, from the UICC to validate against the requesting app's signature. For additional security, the requesting device application's name can be included in the ARA-M 316 so that multiple apps from the same vendor cannot be used without additional steps and the chance of fingerprint collisions is significantly reduced.

UICC applications stored on a UICC as well as access rules can be provisioned and/or updated via an Over-The-Air (OTA) 321 mechanism that network operator's may use to provide updates to settings on their UICCs via communication networks. ARA-M 316 is one of the applications that can be present on a UICC.

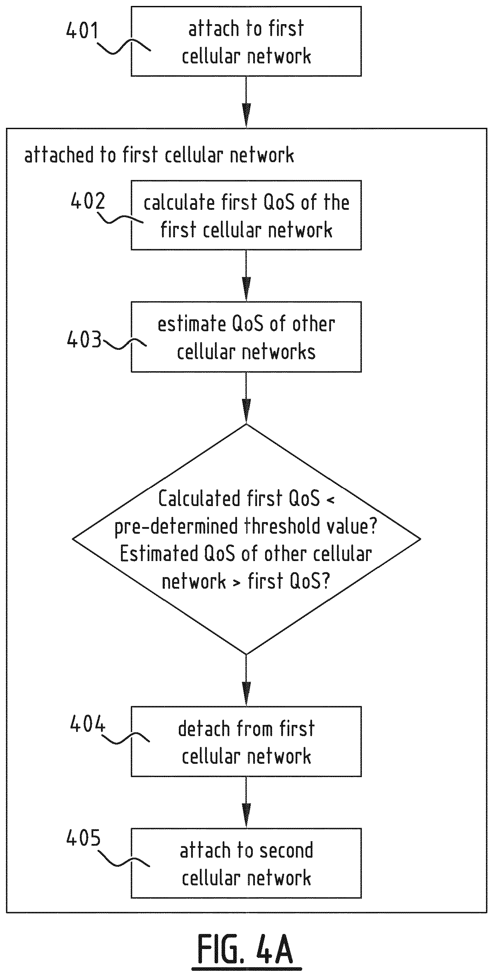

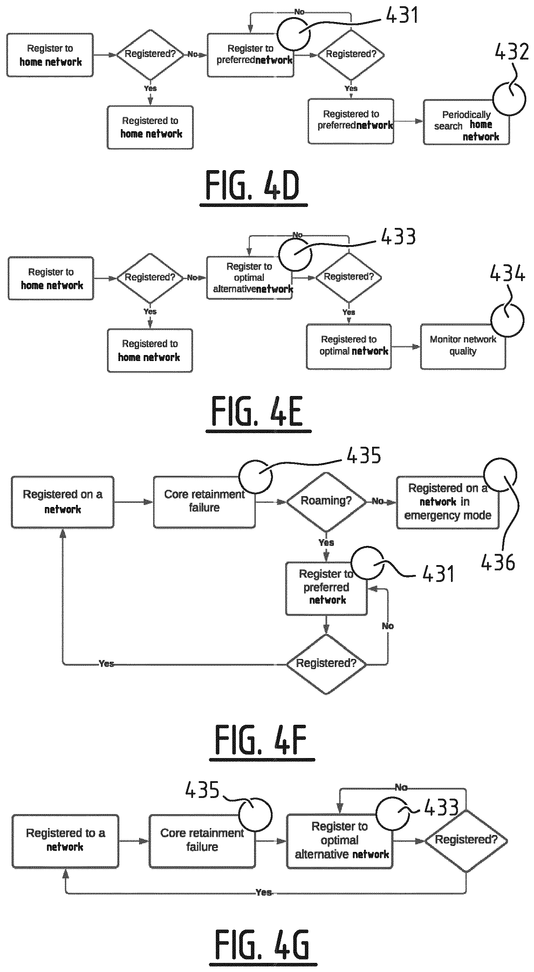

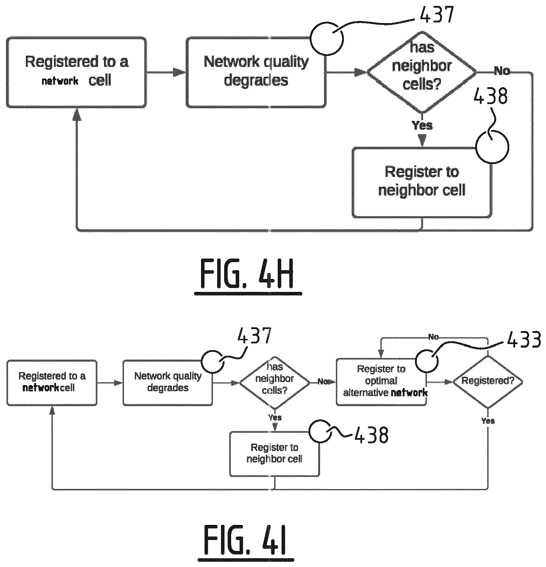

Figures 4A-4I depict methods of operating a mobile communication device.

A computer-implemented method of operating a mobile communication device is depicted in figure 4A. Steps which are presented in series may be performed in parallel.

A mobile communication device may execute the following steps. For example, the device may contain a user space application which is configured to carry out the following steps. Alternatively, the OS of the device may be configured to carry out these steps.

A mobile communication device may attach 401 to a first cellular network. While the mobile communication device is attached to the first cellular network, the device may carry out various steps without detaching from the first cellular network.

The mobile communication device may establish a data connection over the attached network. The device may exchange data over the established data connection.

The device may calculate 402 a first quality of service of the first cellular network.

In certain embodiments, once the device has attached to the network selected by the mobile communication device, for example via a user space application, the mobile communication device, for example via a user space application, may start monitoring 434 the quality of service of the attached network for significant degradations. A mobile communication device may calculate a quality of the attachment between the mobile communication device and the first cellular network on the basis of measured first network quality parameters.

In certain embodiments, calculating the first quality of service network comprises measuring first network quality parameters of the first cellular network and calculating the first quality of service of the first cellular network based on the basis of the measured first network quality parameters.

In order to calculate the first quality of service, the mobile communication device may use certain components of the device, for example the modem. Such components may have limited capacity to support communication, for example limited capacity to exchange data. In order to preserve a data connection and/or to minimize the disruption of data exchange over a data connection, the device may schedule measuring at times when no data or a small amount of data is exchanged, in order to optimally use available capacity of the relevant components.

The measured first network quality parameters may comprise data quality parameters and/or signal parameters.

The data quality parameters preferably comprise at least one of a latency, a jitter, a packet loss rate, and retransmission rate. Data quality parameters may relate to a data connection established by the mobile communication device, or for example to a potential data connection which may be established.

The signal quality parameters may comprise at least one of a signal strength, a signal quality, a radio access technology ("RAT"), being used, a frequency being used, and a distance to base station.

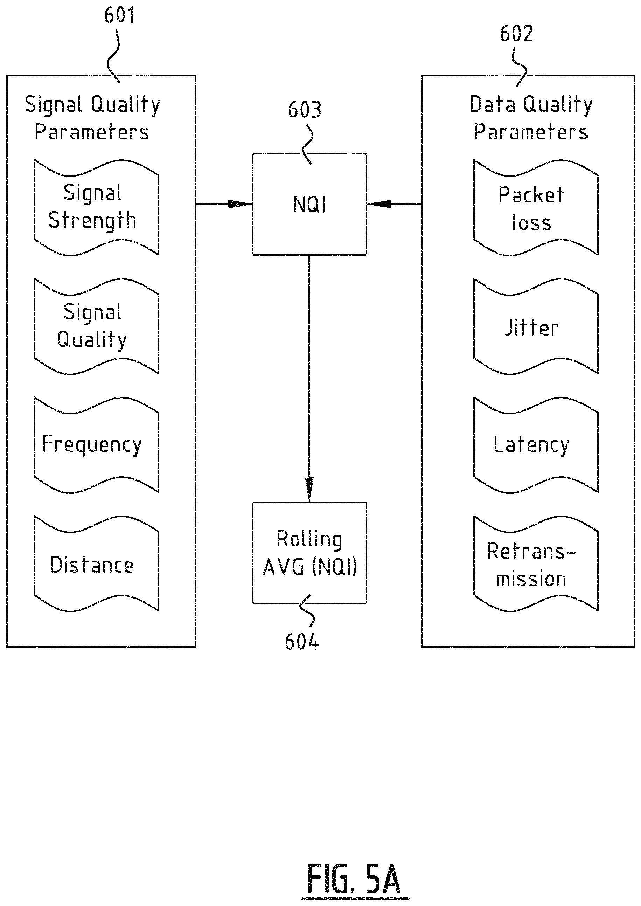

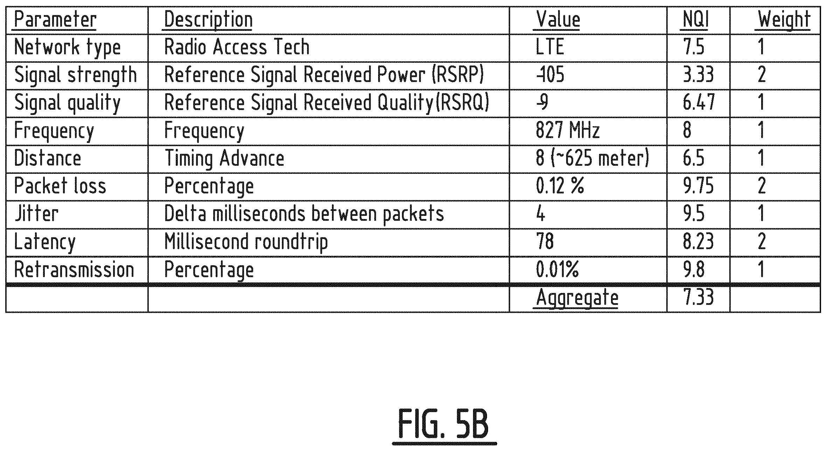

In some embodiments, calculating the first quality of service may comprise converting each of the measured first network quality parameters to a numerical value, calculating a weighted sum of the numerical values; and adding the calculated weighted sum to a rolling average, for example according to the method described with reference to figures 5A and 5B. For each of a plurality of other available cellular networks, the device may estimate 403 a quality of service thereof.

In some embodiments, if the quality of service of the first cellular network is lower than a predetermined threshold value, and no quality of service of other available cellular networks is known, for example because no times suitable for measuring occurred, a device may interrupt a data connection in order to stop data exchange over the data connection, and then measure network quality parameters of each of a plurality of other available cellular networks.

In some embodiments, if the quality of service of the first cellular network is lower than a predetermined threshold value, and no other available cellular networks are found or no other available cellular networks with a sufficient quality of service are found, the device may attempt to remain attached to the first cellular network.

In certain embodiments, estimating a quality of service of each of the plurality of other available cellular networks may comprise measuring second network quality parameters of each of the plurality of other available cellular networks and estimating the quality of service of each of the plurality of other available cellular network on the basis of the measured second network quality parameters of each of the plurality of other available cellular networks, respectively.

The device may take a decision on whether or not to measure second network quality parameters based on whether or not the quality of the attachment between the mobile communication device and the first cellular network is higher than or equal to a first pre-determined threshold value, or the device may measure second network quality parameters automatically or by default until a different condition applies. It will be appreciated that measuring network quality parameters of other available networks may involve measuring or scanning whether or not any other networks are available in the area at all, and may involve measuring or scanning parameters of a single other network or multiple other networks.

The measured second network quality parameters comprise signal quality, which may comprise one or more of signal strength, a signal quality, a radio access technology, RAT, being used, a frequency being used, and a distance to base station.

Measuring or scanning network quality parameters of other available cellular networks may involve temporarily disconnecting the data connection running via the attachment to the first network, or may involve interrupting downlink and uplink data exchange over the data connection, for example in case when the mobile communication device comprises a single modem which would be required in order to exchange data over the first network and would also be required to measure the quality of service of other networks. Accordingly, some applications and services of the mobile communication device may be interrupted by measuring or scanning, while others may not be interrupted. For example, text data exchange or file data exchange may be interrupted, while voice communication may not be interrupted.

In some embodiments, estimating a quality of service of each of the plurality of other available cellular networks on the basis of the measured second network quality parameters of each of the plurality of other available cellular networks, respectively, may comprise, for each of the plurality of other available cellular networks: converting each measured second network parameter to a numerical value, calculating a weighted sum of the converted numerical values for each one among the plurality of other available cellular networks; and adding each calculated weighted sum to a rolling average for the respective one among the plurality of other available cellular networks.

Between attaching the mobile communication device to a first cellular network and detaching the mobile communication device from the first cellular network, the mobile communication device may be kept attached to the first cellular network and/or may not be attached to another cellular network different from the first cellular network.

In certain embodiments, a mobile communication device may estimate a quality of a potential attachment between the mobile communication device and the second cellular network on the basis of measured second network quality parameters.

According to various embodiments, measuring of network quality parameters, for example first and/or second network quality parameters, may occur continuously, regularly, or at predetermined irregular intervals over a span of time, for example while certain conditions apply.

If the calculated first quality of service is lower than a pre-determined threshold value representing a minimally acceptable quality of service and the estimated quality of service of at least one of the plurality of other available cellular networks is higher than the first quality of service, the device may detach 404 from the first cellular network; and attach 405 to a second cellular network among the at least one of the plurality of other available cellular networks that has an estimated quality of service higher than the first quality of service.

When the device detaches form a first cellular network and attaches to a second cellular network, certain types of cellular network communication may be interrupted while other types may be substantially uninterrupted. For example, voice communication may be interrupted, or the data connection itself may be interrupted, while data exchange over a data connection over the first cellular network may not be substantially interrupted.

In certain embodiments, the mobile communication device may detach 404 the mobile communication device from the first cellular network; and attach 405 the mobile communication device to a second cellular network if the quality of service of the second cellular network is a certain minimum amount higher than the first quality of service, for example a certain percentage better, for example at least 10 percent higher. In this context, a quality of service may be quantified according to the method described with reference to figures 5A and 5B, for example.

In certain embodiments, attaching the mobile communication device to a cellular network among the at least one of the plurality of other available cellular networks that has an estimated quality of service higher than the first quality of service may comprise attaching the mobile communication device to the cellular network among the at least one of the plurality of other available cellular networks that has the highest estimated quality of service.

In certain embodiments, when the quality of service degrades significantly, the mobile communication device, for example via a user space application, may reattach 433 to an optimal network. In certain embodiments, when the first network quality drops below the first threshold value, the mobile communication device may first attempt to remain attached to the network by switching to a different RAT, but in other embodiments, the device does not attempt to remain attached to the first cellular network via a different RAT.

The involved attachments to the first and second network may use the same single radio access technology, RAT, or these networks or may involve different RATs.

In certain embodiments, detaching the mobile communication device from the first cellular network and attaching the mobile communication device to the second cellular network different from the first cellular network may not be performed in cases wherein the calculated quality of the attachment to the first cellular network is not lower than a first pre-determined threshold value and/or the estimated quality of the potential attachment to the second cellular network is not higher than a second pre-determined threshold value.

In certain embodiments, in attaching to the second cellular network, the selection of at least one multiplexing parameter, for example frequency, of the attachment to be established, may be based on signal quality parameters of the second cellular network which have been measured during the measuring signal qualities of the second cellular network, which may speed up the attaching.

In certain embodiments of the method, while the mobile communication device is attached to the second cellular network, it may calculate a second quality of service of the second cellular network; and if the calculated second quality of service is lower than the first quality of service: the device may detach the mobile communication device from the second cellular network; and reattach the mobile communication device to the first cellular network, for example via the same method through which the device switched from the first cellular network to the second cellular network.

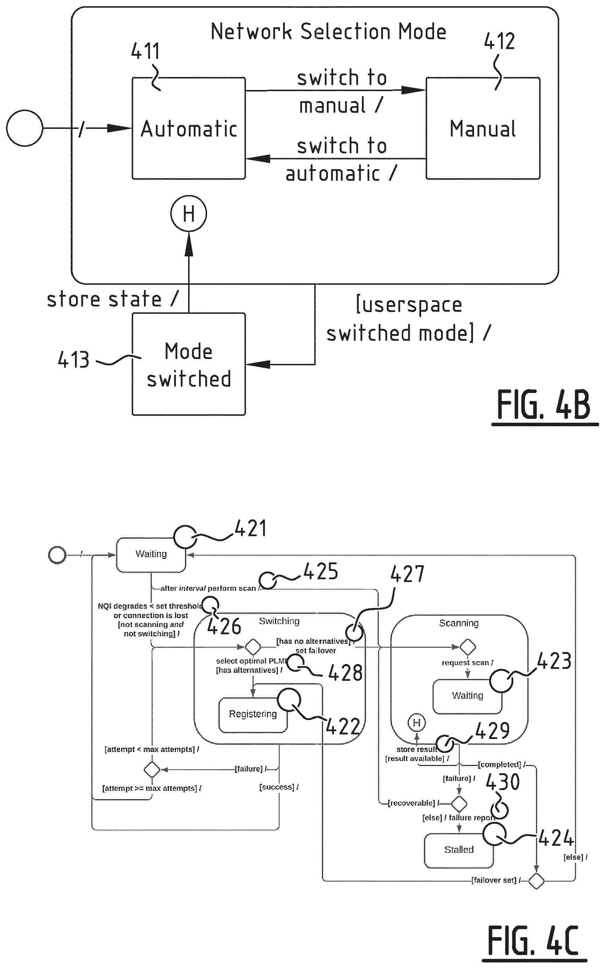

As depicted in Figure 4B, in certain embodiments of the method, a mobile communication device may operate the modem in an automatic network selection mode 411 in which decisions regarding network attachment are made according to predetermined rules and preferences , or in a manual network selection mode 413 in which decisions regarding network attachment are substantially controlled by instructions executed in user space.

The mobile communication device may control the selection of this network selection mode, for example through or by an application running in user space or running on the UICC. When the mobile communication device switches the network selection mode in a mode switch 413, the device may switch modes and may store the selected mode persistently until another mode switch 413 is initiated from user space. The mobile communication device may perform the method according to the invention while operating in a manual network selection mode.

The OS of a mobile communication device may remember the last attached network of the device. At start up or reset of a mobile communication device, the mobile communication device may attempt to attach to this last attached network before shutdown, if available, according to the information stored in the OS. A device application configured to carry out a method according to the invention may be started automatically or manually after the device is started or reset. A device application may carry out the first attachment of a device after start up or reset of the device, or may be started after the device has attached to a first cellular network and may carry out a method or a rest of a method according to the invention.

A specific embodiment of a method of operating a mobile communication device, which is compatible with the above-described methods and embodiments, is depicted in figure 4C. The method may be completely or partially executed by a device application, for example. The method of figure 4C comprises the following states.

In a first state 421, the mobile communication device registered with, and attached to, a network may await triggers to act. In a second state 422, the mobile communication device is registering. The mobile communication device may perform a registration on a mobile network. In third state 423, the mobile communication device is waiting and/or scanning. The mobile communication device may await scan results from the modem. In a fourth state 424, the mobile communication device is stalled. A failure of the mobile communication device may be unrecoverable, and a device application may not be usable until user acts.

When the device is idle, currently not actively used by the user, the device may periodically, with a configurable interval, request 425 a network scan which observes all available networks on configurable frequency bands and channels.

In certain cases, the quality of service of the currently attached network may degrade 426 and drop below the configurable threshold. A network switch is triggered. In certain cases, a switch is required but no alternative networks may be saved to switch to. The mobile communication device may then request or perform 427 a network scan and use said scan to switch. Alternatively, in certain cases, the device may have alternative networks saved from a recent scan and may start registering 428 to an alternative network using manual network selection.

A result which the network scan reports may be saved 429 to a history state of the scan, for example in a data file in memory. These results may be considered to remain valid within a configurable time interval. Invalid results may be removed or updated according to new measurements.

When a scan reports a failure which is not recoverable, e.g. the device does not support scanning, the failure may be reported 430, and the state of the device may be switched to stalled.

As illustrated in Figures 4D-4H, in certain embodiments of the method, at switch-on, the device may attach 431 to the last registered network as stored in the UICC when available. If no registered network is stored, or if the registered network is unavailable and no home network is available, or the attempted registration fails, the device may follow, depending on which mode it is in, automatic or manual network selection. In automatic network selection mode 411, the device may select and attempt registration on other available networks, following a preference rule (e.g., home network, user controlled, operator controlled, radio access technology, signal quality). Registration may only be allowed by the network operator on some networks.

In manual network selection mode 412, the device may list all available networks (including radio access technology and signal parameters) to the user space. The desired network may be selected by the user space, for example, by an OS, a device application, or a user, and the device may attempt registration on the selected network. Once the device has registered on a network selected by the user space, the device may not automatically register on a different network while in manual network selection mode.

Furthermore, in certain embodiments, at switch on, the device may attach to the last registered network. But, if no registered network is stored, or if the registered network is unavailable and no equivalent home network is available, or the attempted registration fails, the mobile communication device, for example via a user space application, may request the device to search for the networks available and allowable. The device may present any available networks to a user space application. the mobile communication device, for example via a user space application, may select and register 433 with a network according to network quality parameters in manual network selection mode.

In certain embodiments of the method, a device in automatic network selection mode, periodically searches 432 for a higher priority network with the same Radio Access Technology and/or Mobile Country Code (MCC) of the currently registered network. When a higher priority network is available, and the device is in idle mode, it may attempt reselection of the available higher priority network.

In certain embodiments of the method, during normal operational procedures it is possible that a device loses 435 its attachment to the mobile core network. If this occurs the device may attempt to re-register 431 on the previously attached network. If this operation fails and the device is not in a roaming scenario it may fall back 436 to an emergency attached mode. In a roaming scenario the device may attempt to select and register 431 with another network.

In certain embodiments of the method, when the device has failed 436 to register successfully on a network, the device may nevertheless be able to make emergency calls on an available network as determined by network characteristics.

In certain embodiments of the method, when a device is attached to a specific cell in a network changes in location or intervening topography may lead to a degradation 437 of the signal quality/strength of the received radio signals. In this situation a device may opt to attempt to register 438 via a nearby cell of the same network which has a better signal quality/strength. If no other cell can provide a better signal the device may remain attached to the current cell despite the significant negative impact on performance. During this operation, the device or network may opt to downgrade the used Radio Access Technology (RAT) to keep the device on the same network.

In certain embodiments of the method, should another cell on the same network, potentially with a different RAT, be available, the device may switch to this cell either in active mode (handover) or passive mode (reselection). During this procedure, all user-plane and control-plane for the device may be transferred over to the new serving cell.

Figures 5A and 5B depict a method and example of calculating, estimating, and modelling the quality of attachments for a mobile communication device.

Various decisions on alternative behaviours according to devices and methods according to the invention are governed by network quality parameters.

In an embodiment, the current quality of service of a network is represented by a network quality indicator 603, NQI, which is calculated according to a predetermined formula or algorithm, based on various measured network quality parameters. The NQI 603 may be a composite value that aggregates important network quality parameters into a single value. Inputs for the NQI 603 may vary based on the radio access technology that is used by the electronic device. Furthermore, in certain embodiments the mobile communication device, for example via a device application, may be configurable by a user, the OS, or an operator in order to tune the various parameters to be measured and their relative weight and to tailor these parameters and weights per RAT and per user (or group of users). Different users may have different requirements regarding the minimum expected quality, the point where they want the application to switch over to another network or the number of samples they would like to have evaluated before changes are effected.

The NQI 603 may be a single numerical value for each of a plurality of networks, which value varies over time. Based on this value a mobile communication device may take automated decisions on whether to stay attached to the network or switch networks

During operation, a mobile communication device may, for example via a device application, request the API for information concerning the attached network and, optionally with a configurable regular interval, request the modem to provide an overview of network quality parameters of other networks in an area. Based on repeated feedback from the attached network and other networks in an area the app may repeatedly calculate and recalculate the NQI 603 of both the attached network and other networks. If the NQI 603 of the serving network drops below a certain configurable threshold, the mobile communication device may initiate a switch to an other network, which may involve detaching from the attached network and immediately attaching with an optimal alternative network.

The measured network quality parameters may comprise data quality parameters 602 of a data connection over an attached network and/or signal quality parameters 601 of a attached network and/or signal quality parameters 601 of one or more unattached networks in the area in which the device is present. Data quality parameters 602 may be parameters related to an active packet data protocol (PDP) context. Data quality parameters 602 may comprise one or more of latency, jitter, packet loss rate, and retransmissions. Signal quality parameters 601 preferably comprise one or more of signal strength, signal quality, radio access technology, RAT, being used, frequency being used, and distance to base station. This is illustrated in figure 5A.

In certain cases, for example when a core network of an operator cellular network has a problem, the signal quality of an attached network may be high, while data exchange is of low quality or is absent. Through incorporating both data quality parameters 602 and signal quality parameters 601, the calculation of the NQI 603 may return an NQI 603 below a relevant threshold value in such cases.

An NQI 603 may be recalculated at a first regular interval. An interval at which the NQI 603 for a cellular network is recalculated may be configurable by the user, by the device, and/or by an operator. Periodically recalculating an NQI 603 may inform the estimation of the network quality of an unattached network. In certain embodiments, calculating or estimating a quality of the attachment between the mobile communication device and a cellular network may comprise modelling a physical quality of the cellular network.

In certain embodiments, an instance of an NQI 603 calculation based on measured network quality parameters may be performed according to formula 1. NQI 603 value calculations for attached networks and unattached networks may use different network quality parameters or may use network quality parameters with different relative weights, and may be compared according to a predetermined weighting or scaling scheme. Such comparisons may be performed if NQI 603 values for different networks represent different physical quantities or different aspects of networks. In practice this is not prohibitive to effective operation.

Formula 1:

$$NQI = \frac{(param_1 * weight_1) + (param_2 * weight_2) + (param_n * weight_n)}{total\ weight}$$

Calculating a value according to formula 1 results in a NQI 603 value, which according to certain embodiments may be added to a time series. Network quality parameters may be sampled regularly and, to prevent erratic behaviour of the mobile communication device, the results may be interpreted over a second configurable interval in order to guard against brief dips in the network quality parameters which may for example occur because of movement where an object obstructs the line of sight with a cell tower. The NQI calculation may utilise a rolling average 604 over a recent time series of measured network quality parameters, for example according to formula 2.

Formula 2:

$$AVG(NQI) = \frac{NQI_1 + NQI_2 + NQI_n}{n}$$

In certain embodiments, in order to increase the accuracy and efficiency of the NQI 603 a Kalman filter may be used to add a weighted average deviation wherein a single outlier in the time series of values does not negatively impact the calculation and/or estimation and causes undue switching between networks.

In addition to the use of a Kalman filter, an embodiment may involve assigning a different weight to a value according to its recentness, for example by assigning a higher weight to a more recent value and a lower weight to a less recent value, for example assigning half the weight of the previous value to each consecutive less recent value.

An example of a calculation of an NQI 603 according to one or more of the above-described embodiments is illustrated in figure 5B. Various network quality parameters may be measured by the mobile communication device. For each network quality parameters, a measured value may be converted to a numerical value which may be on a predetermined scale, for example 0-10 or 0.00-10.00.

Conversion of measured values may comprise, for example, linearly mapping measured values in a certain range to the predetermined scale, while mapping outliers to the boundary values of the predetermined scale. For example, a specific conversion calculation for a measured Latency value could be a linear mapping wherein a measured value of 350 or greater would evaluate to an NQI parameter value of 0.00, and a measured value of lower than 10 would equate to a value of 10.00. In the example depicted in figure 5B, the NQI parameter value of Latency would equate to an NQI of 8.23.

Alternatively, in other embodiments or for other values in the same embodiment, conversion of measured values may comprise, for example, a conversion to a stepped scale, and/or a conversion of specific enumeration values, for example 'LTE' to specific values on a scale.

Each converted measured value may receive a weight, for example a predetermined weight determined by the type of network quality parameter and/or the currently used radio access technology.

The values may be added up or averaged, and/or may be used in a rolling average 604 as described above, in order to acquire an aggregate value which may be referred to as an NQI value. A value of the NQI 603 resulting from such a calculation may be for example a value ranging from 0 to 10 or from 0.00 to a maximum of 10.00 wherein lower values may indicate a lower measured or estimated quality of service for the mobile communication device on a particular network.

In certain embodiments, an NQI value for a currently attached network may be calculated from the same values and weights as a NQI values of the plurality of other available networks, and these values may model the same physical value or may consist of the same basket of values. In other embodiments, an NQI value for a currently attached network may be calculated from at least partly different values and weights as NQI values of the plurality of non-attached networks, wherein these measured values are converted to values on a same predetermined scale in both cases, or by fitting both NQI values to a same scale during a comparing operation.

A mobile communication device, for example via a device application or OS, may provide a user interface which may be served to the user via one or more input devices and output devices. In an embodiment, a device application or OS comprises a graphical user interface served to the user via a display, for example a touch screen, comprised in the mobile communication device.

A user interface may present real-time information on all measured network quality parameters, or on a selected or selectable set of network quality parameters of a plurality of cellular networks including but not limited to attached networks, unattached networks, home networks, preferred networks, and/or measured or scanned networks.

A user interface may be configured to allow a user to manually initiate measuring network quality parameters of a plurality of available networks. Manually initiating measuring may comprise automatically interrupting data exchange over a data connection over an attached network, or interrupting the data connection itself. This may occur for example in order to use the capacity of a component required for network communication, for example a modem.

A user interface may be configured to allow a user to manually initiate detaching from a selected cellular network. A user interface may be configured to allow a user to manually initiate attaching to a selected cellular network among the plurality of cellular networks. A user interface may be configured to allow a user to configure various threshold values to be used by the device application or OS serving the user interface in order to automatically attach to, and detach from, networks in accordance with the methods described herein.

The various operating methods described in this document may be implemented by a computer, for example as software running on a mobile communication device. In particular, these methods may be at least partially implemented by a device application be stored in the memory of the device and executed using the processor of the device. The device application may operate in user space and may obtain control and observation authorizations for secured components from a UICC. Alternatively or additionally, these methods may be at least partially implemented by an OS of a mobile communication device, or less preferably on an application running on a UICC.

Software implementing the described methods or parts of the described methods may be supplied separately as a computer program product or software update. Such software may be supplied via a network service, and may be delivered via a data connection to said network service. Alternatively, such software may be embodied on a data carrier such as a DVD or a solid state drive.

A UICC according to the above-described methods and devices may be supplied separately from a mobile communication device. Such a UICC may be a customized UICC which may contain identification data related to the relationship between a user and one or more cellular network operators; authorization information related to a device application implementing at least part of one of the above-described methods; and/or applications implementing at least part of the above-described methods, in particular parts relating to overruling default behaviour relating to controlling of the modem of a mobile communication device.

It will be clear to the skilled person that variations and modifications of the specific embodiments described above can be implemented without departing from the scope of the appended claims, which define the extent of protection conferred by the present application.

## Claims

1. Computer-implemented method of operating a mobile communication device (201, 314), wherein the mobile communication device (201, 314) comprises:

a processor (204);
a memory (206) storing a user space application (301, 311) and an operating system, OS, (302);
an antenna (203);
a modulator demodulator unit, modem (202, 303); and
a universal integrated circuit card, UICC, (207, 304, 319), which might be an embedded UICC, e-UICC, comprising a subscriber identity module, SIM, application and an authentication application; the method comprising:

by the user space application (301, 311):

- sending a request to the modem (303) via an application programming interface, API (302) of the operating system (302); and
- initiating, via the operating system (302) a secure element access procedure;

by the operating system (302):

- performing the secure element access procedure using a secure element access API (312) and an access control enforcer (313); and
- checking, based on access control data (317) stored on the UICC (207, 304, 319), the privileges which the user space application (311) has to access requested modem functions;
- in case the user space application (311) satisfies the check, enabling the user space application (311) to access a set of API calls in the OS providing access to the modem (303) at an elevated level;

by the user space application (301, 311):- attaching (401) the mobile communication device to a first cellular network; and
while the mobile communication device is attached to the first cellular network:

- calculating (402) a first quality of service of the first cellular network;
- using the modem (202, 303) and the antenna (203) to measure, for each of a plurality of other available cellular networks, network quality parameters thereof and
- calculating (403), for each of the plurality of other available cellular networks, on the basis of the respective measured network quality parameters, the quality of service thereof; and

if the calculated first quality of service is lower than a pre-determined threshold value representing a minimally acceptable quality of service and the estimated quality of service of at least one of the plurality of other available cellular networks is higher than the first quality of service:

- detaching (404) the mobile communication device from the first cellular network; and
- attaching (405) the mobile communication device to a second cellular network among the at least one of the plurality of other available cellular networks that has an estimated quality of service higher than the first quality of service.

2. Method according to any of claim 1, wherein the step of attaching (405) the mobile communication device to a cellular network among the at least one of the plurality of other available cellular networks that has an estimated quality of service higher than the first quality of service comprises:
attaching (405) the mobile communication device to the cellular network among the at least one of the plurality of other available cellular networks that has the highest estimated quality of service.

3. Method according to any of the claims 1 through 2, wherein the step of calculating (402) the first quality of service network comprises:

measuring first network quality parameters of the first cellular network;
calculating the first quality of service of the first cellular network based on the basis of the measured first network quality parameters.

4. Method according to claim 3, wherein the measured first network quality parameters comprise data quality parameters,
wherein the data quality parameters preferably comprise at least one of a latency, a jitter, a packet loss rate, and retransmissions.

5. Method according to any of claims 3 through 4, wherein the measured first network quality parameters comprise signal quality parameters,
wherein the signal quality parameters preferably comprise at least one of a signal strength, a signal quality, and a distance to base station.

6. Method according to any of claims 3 through 5, wherein the calculating (402) the first quality of service comprises:

converting each of the measured first network quality parameters to a numerical value;
calculating a weighted sum of the numerical values; and
adding the calculated weighted sum to a rolling average.

7. Method according to claim any of the claims 1 through 6, wherein the step of detaching (404) the mobile communication device from the first cellular network and the step of attaching (405) the mobile communication device to a second cellular network are executed only:
if the calculated first quality of service is lower than a pre-determined threshold value representing a minimally acceptable quality of service and the quality of service of the second cellular network is a certain minimum amount higher than the first quality of service, for example a certain percentage higher, for example at least 10 percent higher.

8. Method according to any of the claims 1 through 7, wherein the measured second network quality parameters comprise signal quality parameters,
wherein the signal quality parameters preferably comprise one or more of signal strength, a signal quality, and a distance to base station.

9. Method according to any of claims 7 through 8, wherein the step of estimating (403) a quality of service of each of the plurality of other available cellular networks on the basis of the measured second network quality parameters of each of the plurality of other available cellular networks, respectively, comprises for each of the plurality of other available cellular networks:

converting each measured second network parameter to a numerical value;
calculating a weighted sum of the converted numerical values for each one among the plurality of other available cellular networks; and
adding each calculated weighted sum to a rolling average for the respective one among the plurality of other available cellular networks.

10. Method according to any of claims 7 through 9,

wherein the network quality parameters measured of each of the plurality of other available cellular networks comprise signal quality parameters and are based on the radio access technology used by mobile communication device for that other cellular network;
wherein in attaching (405) to the second cellular network, selection of at least one multiplexing parameter of the attachment to be established is based on the signal quality parameters measured of that second cellular network.

11. Computer program product comprising instructions which, when the program is executed by a mobile communication device, cause the mobile communication device to carry out the method according to any of the claims 1 through 10.

12. Mobile communication device (201) comprising:

a processor (204);
a memory (206) storing a user space application (301, 311) and an operating system, OS, (302);
an antenna (203);
a modulator demodulator unit, modem (202, 303); and
a universal integrated circuit card, UICC, (207, 304, 319), which can be an embedded UICC, e-UICC, comprising a subscriber identity module, SIM, application and an authentication application;
wherein the processor (204) is configured to execute the user space application (301, 311) to:

- send a request to the modem (303) via an application programming interface, API (302) of the operating system (302);
- initiate, via the operating system (302)), a secure element access procedure;

and by the operating system (302):

- perform the secure element access procedure using a secure element access API (312) and an access control enforcer (313); and
- check, based on access control data (317) stored on the UICC (319), the privileges which the user space application (311) has to access requested modem functions;
- in case the user space application (311) satisfies the check, enable the user space application (311) to access a set of API calls in the OS providing access to the modem (303) at an elevated level;

and to further execute the user space application (301, 311) to:

- control the modem (202) to attach the mobile communication device (201) to a first cellular network, using the antenna (203); and

while the mobile communication device (201) is attached to the first cellular network:

- calculate a first quality of service of the first cellular network;
- use the modem (202, 303) and the antenna (203) to measure, for each of a plurality of other available cellular networks, network quality parameters thereof and calculate (403), for each of the plurality of other available cellular networks, on the basis of the respective measured network quality parameters, the quality of service thereof; and

if the calculated first quality of service is lower than a pre-determined threshold value representing a minimally acceptable quality of service and the estimated quality of service of at least one of the plurality of other available cellular networks is higher than the first quality of service:

- control the modem (202) to detach the mobile communication device from the first cellular network, using the antenna (203); and
- control the modem (202) to attach the mobile communication device to a second cellular network among the at least one of the plurality of other available cellular networks that has an estimated quality of service higher than the first quality of service, using the antenna (203).

13. Mobile communication device (201) according to claim 12, wherein the processor (204) is further configured to execute the method of any one of the claims 2 through 10.

14. Mobile communication device (201) according to any of claims 12 through 13, further comprising:

an output component; and
an input component,
wherein the processor (204) is further configured to execute instructions stored in the memory (206) to:

present a user interface listing the plurality of other available cellular networks, via the output component; and
through the user interface, allow a user to select a preferred cellular network among the plurality of other available cellular networks in order to manually detach from the first cellular network and attach to the preferred cellular network, via the input component.

**Patentansprüche**

1. Computerimplementiertes Verfahren zum Betreiben einer mobilen Kommunikationsvorrichtung (201, 314), wobei die mobile Kommunikationsvorrichtung (201, 314) umfasst:

einen Prozessor (204);
einen Speicher (206), der eine Benutzerraumanwendung (301, 311) und ein Betriebssystem, OS, (302) speichert;

eine Antenne (203);

eine Modulator-Demodulator-Einheit, Modem, (202, 303); und

eine universelle integrierte Schaltungskarte, UICC, (207, 304, 319), die eine eingebettete UICC, e-UICC, sein könnte, umfassend eine Teilnehmerkennungsmodulanwendung, SIM-Anwendung, und eine Authentifizierungsanwendung;

das Verfahren umfassend:

durch die Benutzerraumanwendung (301, 311):

- Senden einer Anforderung an das Modem (303) über eine Anwendungsprogrammierschnittstelle, API, (302) des Betriebssystems (302); und
- Einleiten, über das Betriebssystem (302), eines Zugriffsvorgangs eines sicheren Elements;

durch das Betriebssystem (302):

- Durchführen des Zugriffsvorgangs des sicheren Elements unter Verwendung einer Zugriffs-API (312) des sicheren Elements und eines Zugriffssteuerungsdurchsetzers (313); und
- Prüfen, basierend auf Zugriffssteuerungsdaten (317), die auf der UICC (207, 304, 319) gespeichert sind, der Berechtigungen, die die Benutzerraumanwendung (311) aufweist, um auf angeforderte Modemfunktionen zuzugreifen;
- im Falle, dass die Benutzerraumanwendung (311) die Prüfung erfüllt, Ermöglichen der Benutzerraumanwendung (311), auf einen Satz von API-Aufrufen in dem OS zuzugreifen, wobei ein Zugriff auf das Modem (303) auf einer erhöhten Ebene bereitgestellt wird;

durch die Benutzerraumanwendung (301, 311):- Verbinden (401) der mobilen Kommunikationsvorrichtung mit einem ersten Mobilfunknetz; und

während die mobile Kommunikationsvorrichtung mit dem ersten Mobilfunknetz verbunden wird:

- Berechnen (402) einer ersten Dienstgüte des ersten Mobilfunknetzes;
- Verwenden des Modems (202, 303) und der Antenne (203), um, für jedes einer Vielzahl von anderen verfügbaren Mobilfunknetzen, Netzgüteparameter davon zu messen, und
- Berechnen (403), für jedes der Vielzahl von anderen verfügbaren Mobilfunknetzen, auf der Basis der jeweiligen gemessenen Netzgüteparameter, der Dienstgüte davon; und

falls die berechnete erste Dienstgüte niedriger als ein zuvor bestimmter Grenzwert ist, der eine minimal akzeptable Dienstgüte darstellt, und die geschätzte Dienstgüte mindestens eines der Vielzahl von anderen verfügbaren Mobilfunknetzen höher als die erste Dienstgüte ist:

- Trennen (404) der mobilen Kommunikationsvorrichtung von dem ersten Mobilfunknetz; und
- Verbinden (405) der mobilen Kommunikationsvorrichtung mit einem zweiten Mobilfunknetz unter dem mindestens einen der Vielzahl von anderen verfügbaren Mobilfunknetzen, das eine geschätzte Dienstgüte aufweist, die höher als die erste Dienstgüte ist.

2. Verfahren nach einem der Anspruch 1, wobei der Schritt des Verbindens (405) der mobilen Kommunikationsvorrichtung mit einem Mobilfunknetz unter dem mindestens einen der Vielzahl von anderen verfügbaren Mobilfunknetzen, das eine geschätzte Dienstgüte aufweist, die höher als die erste Dienstgüte ist, umfasst:
Verbinden (405) der mobilen Kommunikationsvorrichtung mit dem Mobilfunknetz unter dem mindestens einen der Vielzahl von anderen verfügbaren Mobilfunknetzen, das die höchste geschätzte Dienstgüte aufweist.

3. Verfahren nach einem der Ansprüche 1 bis einschließlich 2, wobei der Schritt des Berechnens (402) der ersten Dienstgüte des Netzes umfasst:

Messen erster Netzgüteparameter des ersten Mobilfunknetzes;
Berechnen der ersten Dienstgüte des ersten Mobilfunknetzes basierend auf der Basis der gemessenen ersten Netzgüteparameter.

4. Verfahren nach Anspruch 3, wobei die gemessenen ersten Netzgüteparameter Datengüteparameter umfassen, wobei die Datengüteparameter vorzugsweise mindestens eines von einer Latenz, einem Jitter, einer Paketverlustrate und Neuübertragungen umfassen.

5. Verfahren nach einem der Ansprüche 3 bis einschließlich 4, wobei die gemessenen ersten Netzgüteparameter Signalgüteparameter umfassen,

wobei die Signalgüteparameter vorzugsweise mindestens eine von einer Signalstärke, einer Signalgüte und einer Entfernung zu einer Basisstation umfassen.

6. Verfahren nach einem der Ansprüche 3 bis einschließlich 5, wobei das Berechnen (402) der ersten Dienstgüte umfasst:

Umwandeln jedes der gemessenen ersten Netzgüteparameter in einen numerischen Wert;
Berechnen einer gewichteten Summe der numerischen Werte; und
Addieren der berechneten gewichteten Summe zu einem gleitenden Durchschnitt.

7. Verfahren nach einem der Ansprüche 1 bis einschließlich 6, wobei der Schritt des Trennens (404) der mobilen Kommunikationsvorrichtung von dem ersten Mobilfunknetz und der Schritt des Verbindens (405) der mobilen Kommunikationsvorrichtung mit einem zweiten Mobilfunknetz nur ausgeführt werden:
falls die berechnete erste Dienstgüte niedriger als ein zuvor bestimmter Grenzwert ist, der eine minimal akzeptable Dienstgüte darstellt, und die Dienstgüte des zweiten Mobilfunknetzes um einen gewissen minimalen Betrag höher als die erste Dienstgüte ist, zum Beispiel um einen gewissen Prozentsatz höher, zum Beispiel um mindestens 10 Prozent höher.

8. Verfahren nach einem der Ansprüche 1 bis einschließlich 7, wobei die gemessenen zweiten Netzgüteparameter Signalgüteparameter umfassen,

wobei die Signalgüteparameter vorzugsweise eine oder mehrere von Signalstärke, einer Signalgüte und einer Entfernung zu der Basisstation umfassen.

9. Verfahren nach einem der Ansprüche 7 bis 8, wobei der Schritt des Schätzens (403) einer Dienstgüte jedes der Vielzahl von anderen verfügbaren Mobilfunknetzen auf der Basis der gemessenen zweiten Netzgüteparameter jedes der Vielzahl von anderen verfügbaren Mobilfunknetzen, jeweils, für jedes der Vielzahl von anderen verfügbaren Mobilfunknetzen umfasst: Umwandeln jedes gemessenen zweiten Netzparameters in einen numerischen Wert;

Berechnen einer gewichteten Summe der umgewandelten numerischen Werte für jedes eine unter der Vielzahl von anderen verfügbaren Mobilfunknetzen; und
Addieren jeder berechneten gewichteten Summe zu einem gleitenden Durchschnitt für das jeweilige eine unter der Vielzahl von anderen verfügbaren Mobilfunknetzen.

10. Verfahren nach einem der Ansprüche 7 bis einschließlich 9,

wobei die gemessenen Netzgüteparameter jedes der Vielzahl von anderen verfügbaren Mobilfunknetzen Signalgüteparameter umfassen und auf der Funkzugriffstechnologie basieren, die durch die mobile Kommunikationsvorrichtung für dieses andere Mobilfunknetz verwendet wird;
wobei, bei dem Verbinden (405) mit dem zweiten Mobilfunknetz, eine Auswahl mindestens eines Multiplexparameters der herzustellenden Verbindung auf den gemessenen Signalgüteparametern dieses zweiten Mobilfunknetzes basiert.

11. Computerprogrammprodukt, umfassend Anweisungen, die, wenn das Programm durch eine mobile Kommunikationsvorrichtung ausgeführt wird, die mobile Kommunikationsvorrichtung veranlassen, das Verfahren nach einem der Ansprüche 1 bis einschließlich 10 vorzunehmen.

12. Mobile Kommunikationsvorrichtung (201), umfassend:

einen Prozessor (204);
einen Speicher (206), der eine Benutzerraumanwendung (301, 311) und ein Betriebssystem, OS, (302) speichert;
eine Antenne (203);
eine Modulator-Demodulator-Einheit, Modem, (202, 303); und
eine universelle integrierte Schaltungskarte, UICC, (207, 304, 319), die eine eingebettete UICC, e-UICC, sein kann, umfassend eine Teilnehmerkennungsmodulanwendung, SIM-Anwendung, und eine Authentifizierungsanwendung;

wobei der Prozessor (204) konfiguriert ist, um die Benutzerraumanwendung (301, 311) auszuführen zum:

- Senden einer Anforderung an das Modem (303) über eine Anwendungsprogrammierschnittstelle, API, (302) des Betriebssystems (302);
- Einleiten, über das Betriebssystem (302) eines Zugriffsvorgangs des sicheren Elements;

und durch das Betriebssystem (302):

- Durchführen des Zugriffsvorgangs des sicheren Elements unter Verwendung einer Zugriffs-API (312) des sicheren Elements und eines Zugriffssteuerungsdurchsetzers (313); und
- Prüfen, basierend auf Zugriffssteuerungsdaten (317), die auf der UICC (319) gespeichert sind, der Berechtigungen, die die Benutzerraumanwendung (311) aufweist, um auf angeforderte Modemfunktionen zuzugreifen;
- im Falle, dass die Benutzerraumanwendung (311) die Prüfung erfüllt, Ermöglichen der Benutzerraumanwendung (311), auf einen Satz von API-Aufrufen in dem Betriebssystem zuzugreifen, wobei der Zugriff auf das Modem (303) auf einer erhöhten Ebene bereitgestellt wird;

und um die Benutzerraumanwendung (301, 311) ferner auszuführen zum:

- Steuern des Modems (202), um die mobile Kommunikationsvorrichtung (201) mit einem ersten Mobilfunknetz zu verbinden, unter Verwendung der Antenne (203); und

während die mobile Kommunikationsvorrichtung (201) mit dem ersten Mobilfunknetz verbunden wird:

- Berechnen einer ersten Dienstgüte des ersten Mobilfunknetzes;
- Verwenden des Modems (202, 303) und der Antenne (203), um, für jedes einer Vielzahl von anderen verfügbaren Mobilfunknetzen, Netzgüteparameter davon zu messen und, für jedes der Vielzahl von anderen verfügbaren Mobilfunknetzen, auf der Basis der jeweiligen gemessenen Netzgüteparameter die Dienstgüte davon zu berechnen (403); und

falls die berechnete erste Dienstgüte niedriger als ein zuvor bestimmter Grenzwert ist, der eine minimal akzeptable Dienstgüte darstellt, und die geschätzte Dienstgüte mindestens eines der Vielzahl von anderen verfügbaren Mobilfunknetzen höher als die erste Dienstgüte ist:

- Steuern des Modems (202), um die mobile Kommunikationsvorrichtung von dem ersten Mobilfunknetz zu trennen, unter Verwendung der Antenne (203); und
- Steuern des Modems (202), um die mobile Kommunikationsvorrichtung mit einem zweiten Mobilfunknetz unter dem mindestens einen der Vielzahl von anderen verfügbaren Mobilfunknetzen zu verbinden, das eine geschätzte Dienstgüte aufweist, die höher als die erste Dienstgüte ist, unter Verwendung der Antenne (203).

13. Mobile Kommunikationsvorrichtung (201) nach Anspruch 12, wobei der Prozessor (204) ferner konfiguriert ist, um das Verfahren nach einem der Ansprüche 2 bis einschließlich 10 auszuführen.

14. Mobile Kommunikationsvorrichtung (201) nach einem der Ansprüche 12 bis einschließlich 13, ferner umfassend:

eine Ausgabekomponente; und
eine Eingabekomponente,
wobei der Prozessor (204) ferner konfiguriert ist, um Anweisungen, die in dem Speicher (206) gespeichert sind, auszuführen zum:

Darstellen einer Benutzerschnittstelle, die die Vielzahl von anderen verfügbaren Mobilfunknetzen auflistet, über die Ausgabekomponente; und
mittels der Benutzerschnittstelle, Ermöglichen eines Benutzers, ein bevorzugtes Mobilfunknetz unter der Vielzahl von anderen verfügbaren Mobilfunknetzen auszuwählen, um sich manuell von dem ersten Mobilfunknetz zu trennen und mit dem bevorzugten Mobilfunknetz zu verbinden, über die Eingabekomponente.

**Revendications**

1. Procédé mis en œuvre par ordinateur de fonctionnement d'un dispositif de communication mobile (201, 314), dans lequel le dispositif de communication mobile (201, 314) comprend :

   un processeur (204) ;
   une mémoire (206) stockant une application d'espace utilisateur (301, 311) et un système d'exploitation, OS, (302) ;
   une antenne (203) ;
   une unité de démodulateur modulateur, modem (202, 303) ; et
   une carte à circuit intégré universelle, UICC (207, 304, 319), qui pourrait être une UICC intégrée, e-UICC, comprenant une application de module d'identité d'abonné, SIM, et une application d'authentification ;
   le procédé comprenant :

   par l'application d'espace utilisateur (301, 311) :

   - l'envoi d'une demande au modem (303) par l'intermédiaire d'une interface de programmation d'applications, API (302) du système d'exploitation (302) ; et
   - l'initiation, par l'intermédiaire du système d'exploitation (302), d'une procédure d'accès aux éléments sécurisés ;

   par le système d'exploitation (302) :

   - l'exécution de la procédure d'accès aux éléments sécurisés à l'aide d'une API d'accès aux éléments sécurisés (312) et d'un dispositif de contrôle d'accès (313) ; et
   - la vérification, sur la base de données de contrôle d'accès (317) stockées sur l'UICC (207, 304, 319), des privilèges dont dispose l'application d'espace utilisateur (311) pour accéder à des fonctions de modem demandées ;
   - dans le cas où l'application d'espace utilisateur (311) satisfait à la vérification, l'activation de l'application d'espace utilisateur (311) pour accéder à un ensemble d'appels d'API dans le système d'exploitation fournissant un accès au modem (303) à un niveau élevé ;

   par l'application d'espace utilisateur (301, 311) :- la connexion (401) du dispositif de communication mobile à un premier réseau cellulaire ; et
   lorsque le dispositif de communication mobile est connecté au premier réseau cellulaire :

   - le calcul (402) d'une première qualité de service du premier réseau cellulaire ;
   - l'utilisation du modem (202, 303) et de l'antenne (203) pour mesurer, pour chacun d'une pluralité d'autres réseaux cellulaires disponibles, des paramètres de qualité de réseau de ceux-ci, et
   - le calcul (403), pour chacun de la pluralité d'autres réseaux cellulaires disponibles, sur la base des paramètres de qualité de réseau mesurés respectifs, de la qualité de service de celui-ci ; et

   si la première qualité de service calculée est inférieure à une valeur seuil prédéterminée représentant une qualité de service minimalement acceptable et que la qualité de service estimée d'au moins l'un parmi la pluralité d'autres réseaux cellulaires disponibles est supérieure à la première qualité de service :

   - le détachement (404) du dispositif de communication mobile du premier réseau cellulaire ; et
   - la connexion (405) du dispositif de communication mobile à un second réseau cellulaire parmi l'au moins un parmi la pluralité d'autres réseaux cellulaires disponibles qui a une qualité de service estimée supérieure à la première qualité de service.

2. Procédé selon l'une quelconque de la revendication 1, dans lequel l'étape consistant à connecter (405) le dispositif de communication mobile à un réseau cellulaire parmi l'au moins un parmi la pluralité d'autres réseaux cellulaires disponibles qui a une qualité de service estimée supérieure à la première qualité de service comprend :
   la connexion (405) du dispositif de communication mobile au réseau cellulaire parmi l'au moins un parmi la pluralité d'autres réseaux cellulaires disponibles qui a la qualité de service estimée la plus élevée.

3. Procédé selon l'une quelconque des revendications 1 à 2, dans lequel l'étape de calcul (402) du premier réseau de qualité de service comprend :

la mesure de premiers paramètres de qualité de réseau du premier réseau cellulaire ;
le calcul de la première qualité de service du premier réseau cellulaire sur la base des premiers paramètres de qualité de réseau mesurés.

4. Procédé selon la revendication 3, dans lequel les premiers paramètres de qualité de réseau mesurés comprennent des paramètres de qualité de données,
dans lequel les paramètres de qualité de données comprennent de préférence au moins l'un parmi une latence, une gigue, un taux de perte de paquets et des retransmissions.

5. Procédé selon l'une quelconque des revendications 3 à 4, dans lequel les premiers paramètres de qualité de réseau mesurés comprennent des paramètres de qualité de signal,
dans lequel les paramètres de qualité de signal comprennent de préférence au moins l'une parmi une intensité de signal, une qualité de signal et une distance à la station de base.

6. Procédé selon l'une quelconque des revendications 3 à 5, dans lequel le calcul (402) de la première qualité de service comprend :

la conversion de chacun des premiers paramètres de qualité de réseau mesurés en une valeur numérique ;
le calcul d'une somme pondérée des valeurs numériques ; et
l'ajout de la somme pondérée calculée à une moyenne mobile.

7. Procédé selon l'une quelconque des revendications 1 à 6, dans lequel l'étape consistant à détacher (404) le dispositif de communication mobile du premier réseau cellulaire et l'étape consistant à connecter (405) le dispositif de communication mobile à un second réseau cellulaire ne sont exécutées que :
si la première qualité de service calculée est inférieure à une valeur seuil prédéterminée représentant une qualité de service minimalement acceptable et que la qualité de service du second réseau cellulaire est supérieure d'un certain montant minimum à la première qualité de service, par exemple d'un certain pourcentage supérieur, par exemple d'au moins 10 pour cent supérieure.

8. Procédé selon l'une quelconque des revendications 1 à 7, dans lequel les seconds paramètres de qualité de réseau mesurés comprennent des paramètres de qualité de signal,
dans lequel les paramètres de qualité de signal comprennent de préférence une ou plusieurs parmi une intensité de signal, une qualité de signal et une distance par rapport à la station de base.

9. Procédé selon l'une quelconque des revendications 7 à 8, dans lequel l'étape d'estimation (403) d'une qualité de service de chacun de la pluralité d'autres réseaux cellulaires disponibles sur la base des seconds paramètres de qualité de réseau mesurés de chacun de la pluralité d'autres réseaux cellulaires disponibles, respectivement, comprend pour chacun de la pluralité d'autres réseaux cellulaires disponibles :

la conversion de chaque second paramètre de réseau mesuré en une valeur numérique ;
le calcul d'une somme pondérée des valeurs numériques converties pour chacun parmi la pluralité d'autres réseaux cellulaires disponibles ; et
l'ajout de chaque somme pondérée calculée à une moyenne mobile pour le réseau respectif parmi la pluralité d'autres réseaux cellulaires disponibles.

10. Procédé selon l'une quelconque des revendications 7 à 9,

dans lequel les paramètres de qualité de réseau mesurés de chacun de la pluralité d'autres réseaux cellulaires disponibles comprennent des paramètres de qualité de signal et sont basés sur la technologie d'accès radio utilisée par le dispositif de communication mobile pour cet autre réseau cellulaire ;
dans lequel, lors de la connexion (405) au second réseau cellulaire, la sélection d'au moins un paramètre de multiplexage de la connexion à établir est basée sur les paramètres de qualité de signal mesurés de ce second réseau cellulaire.

11. Produit de programme informatique comprenant des instructions qui, lorsque le programme est exécuté par un dispositif de communication mobile, amènent le dispositif de communication mobile à réaliser le procédé selon l'une quelconque des revendications 1 à 10.

12. Dispositif de communication mobile (201) comprenant :

un processeur (204) ;
une mémoire (206) stockant une application d'espace utilisateur (301, 311) et un système d'exploitation, OS, (302) ;
une antenne (203) ;
une unité de démodulateur modulateur, modem (202, 303) ; et
une carte à circuit intégré universelle, UICC (207, 304, 319), qui peut être une UICC intégrée, e-UICC, comprenant une application de module d'identité d'abonné, SIM, et une application d'authentification ;
dans lequel le processeur (204) est configuré pour exécuter l'application d'espace utilisateur (301, 311) pour :

- envoyer une demande au modem (303) par l'intermédiaire d'une interface de programmation d'applications, API (302) du système d'exploitation (302) ;
- initier, par l'intermédiaire du système d'exploitation (302), une procédure d'accès aux éléments sécurisés ;

et par le système d'exploitation (302) :

- exécuter la procédure d'accès aux éléments sécurisés à l'aide d'une API d'accès aux éléments sécurisés (312) et d'un dispositif de contrôle d'accès (313) ; et
- vérifier, sur la base de données de contrôle d'accès (317) stockées sur l'UICC (319), les privilèges dont dispose l'application d'espace utilisateur (311) pour accéder à des fonctions de modem demandées ;
- dans le cas où l'application d'espace utilisateur (311) satisfait à la vérification, activer l'application d'espace utilisateur (311) pour qu'elle accède à un ensemble d'appels d'API dans le système d'exploitation fournissant un accès au modem (303) à un niveau élevé ;

et pour exécuter en outre l'application d'espace utilisateur (301, 311) pour :

- commander le modem (202) pour connecter le dispositif de communication mobile (201) à un premier réseau cellulaire, à l'aide de l'antenne (203) ; et

lorsque le dispositif de communication mobile (201) est connecté au premier réseau cellulaire :

- calculer une première qualité de service du premier réseau cellulaire ;
- utiliser le modem (202, 303) et l'antenne (203) pour mesurer, pour chacun d'une pluralité d'autres réseaux cellulaires disponibles, des paramètres de qualité de réseau de ceux-ci et calculer (403), pour chacun de la pluralité d'autres réseaux cellulaires disponibles, sur la base des paramètres de qualité de réseau mesurés respectifs, la qualité de service de ceux-ci ; et

si la première qualité de service calculée est inférieure à une valeur seuil prédéterminée représentant une qualité de service minimalement acceptable et que la qualité de service estimée d'au moins l'un parmi la pluralité d'autres réseaux cellulaires disponibles est supérieure à la première qualité de service :

- commander le modem (202) pour déconnecter le dispositif de communication mobile du premier réseau cellulaire, à l'aide de l'antenne (203) ; et
- commander le modem (202) pour connecter le dispositif de communication mobile à un second réseau cellulaire parmi l'au moins un parmi la pluralité d'autres réseaux cellulaires disponibles qui a une qualité de service estimée supérieure à la première qualité de service, à l'aide de l'antenne (203).

13. Dispositif de communication mobile (201) selon la revendication 12, dans lequel le processeur (204) est en outre configuré pour exécuter le procédé selon l'une quelconque des revendications 2 à 10.

14. Dispositif de communication mobile (201) selon l'une quelconque des revendications 12 à 13, comprenant en outre :

un composant de sortie ; et
un composant d'entrée,
dans lequel le processeur (204) est en outre configuré pour exécuter des instructions stockées dans la mémoire (206) pour :

présenter une interface utilisateur répertoriant la pluralité d'autres réseaux cellulaires disponibles, par l'intermédiaire du composant de sortie ; et
par l'intermédiaire de l'interface utilisateur, permettre à un utilisateur de sélectionner un réseau cellulaire préféré parmi la pluralité d'autres réseaux cellulaires disponibles afin de se déconnecter manuellement du premier réseau cellulaire et de se connecter au réseau cellulaire préféré, par l'intermédiaire du composant d'entrée.

FIG. 1A

FIG. 1B

_FIG. 2_

_FIG. 3A_

301 ⌇ App

302 ⌇ OSP API

303 ⌇ Modem

304 ⌇ UICC

## FIG. 3B

**FIG. 3C**

EP 4 064 764 B1

401 — attach to first cellular network

attached to first cellular network

402 — calculate first QoS of the first cellular network

403 — estimate QoS of other cellular networks

Calculated first QoS < pre-determined threshold value? Estimated QoS of other cellular network > first QoS?

404 — detach from first cellular network

405 — attach to second cellular network

## FIG. 4A

**FIG. 4B**

**FIG. 4C**

## FIG. 4D

Register to **home network** → Registered? → No → Register to preferred **network** — 431 → Registered? → Yes → Registered to preferred **network** → Periodically search **home network** — 432

Registered? → Yes → Registered to **home network**

## FIG. 4E

Register to **home network** → Registered? → No → Register to optimal alternative **network** — 433 → Registered? → Yes → Registered to optimal **network** → Monitor network quality — 434

Registered? → Yes → Registered to **home network**

## FIG. 4F

Registered on a **network** → Core retainment failure — 435 → Roaming? → No → Registered on a **network** in emergency mode — 436

Roaming? → Yes → Register to preferred **network** — 431 → Registered? → No

Registered? → Yes → Registered on a **network**

## FIG. 4G

Registered to a **network** → Core retainment failure — 435 → Register to optimal alternative **network** — 433 → Registered? → No

Registered? → Yes → Registered to a **network**

437

| Registered to a network cell | → | Network quality degrades | → | has neighbor cells? | No → | |
| Yes ↓ | | | | | |

438

| Register to neighbor cell |

## FIG. 4H

437

| Registered to a network cell | → | Network quality degrades | → | has neighbor cells? | No → | Register to optimal alternative network | → | Registered? |
| | | | | Yes ↓ | | No ↑ | | Yes ↓ |

433

438

| Register to neighbor cell |

## FIG. 4I

601

Signal Quality
Parameters

Signal
Strength

Signal
Quality

Frequency

Distance

603

NQI

Rolling
AVG (NQI)

604

602

Data Quality
Parameters

Packet
loss

Jitter

Latency

Retrans-
mission

FIG. 5A

| Parameter | Description | Value | NQI | Weight |
|---|---|---|---|---|
| Network type | Radio Access Tech | LTE | 7.5 | 1 |
| Signal strength | Reference Signal Received Power (RSRP) | -105 | 3.33 | 2 |
| Signal quality | Reference Signal Received Quality (RSRQ) | -9 | 6.47 | 1 |
| Frequency | Frequency | 827 MHz | 8 | 1 |
| Distance | Timing Advance | 8 (~625 meter) | 6.5 | 1 |
| Packet loss | Percentage | 0.12 % | 9.75 | 2 |
| Jitter | Delta milliseconds between packets | 4 | 9.5 | 1 |
| Latency | Millisecond roundtrip | 78 | 8.23 | 2 |
| Retransmission | Percentage | 0.01% | 9.8 | 1 |
| | | Aggregate | 7.33 | |

FIG. 5B

EP 4 064 764 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109511107 A
- US 20150373574 A1
- US 10079734 B1
- US 20150092611 A1